# EUROPEAN PATENT APPLICATION

(11) **EP 4 852 471 A1**
(43) Date of publication of application: **09.12.2026**
(21) Application number: 24929205.3
(22) Date of filing: 18.10.2024
(51) Int. Cl.: H04W 4/70

(54) **COMMUNICATION METHOD AND APPARATUS**

(30) Priority: 14.03.2024 CN 202410299195
(71) Applicant: HUAWEI TECHNOLOGIES CO., LTD., Shenzhen, Guangdong 518129 (CN)
(72) Inventor: YU, Youyang, Shenzhen, Guangdong 518129 (CN)
(74) Representative: Huawei European IPR
(86) International application number: PCT/CN2024/125939
(87) International publication number: WO 2025/189757

(57) **Abstract**

A communication method and apparatus are provided, and are applied to the field of communication technologies. The method includes: receiving a first data packet from a first terminal device based on a first session, where the first session is a session of a first personal internet of things network; and sending a second data packet to a second user plane function network element based on the first personal internet of things network and a first correspondence, where the first correspondence includes a correspondence between information about the second user plane function network element and information about at least one personal internet of things network served by the second user plane function network element, and service data included in the second data packet is the same as service data included in the first data packet. The first correspondence may include a correspondence between the information about the second user plane function network element and a plurality of personal internet of things networks served by the second user plane function network element. Cross-region communication between different members in a same personal internet of things network may be implemented by using the first correspondence.

## Description

### CROSS-REFERENCE TO RELATED APPLICATIONS

This application claims priority to Chinese Patent Application No. 202410299195.8, filed with the China National Intellectual Property Administration on March 14, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a personal service to consumer (to consumer, toC), a plurality of terminal devices may form a group, for example, various terminal devices in a home form a group. Similarly, in a service to business (to business, toB), a plurality of terminal devices may also form a group, for example, terminal devices of enterprise employees form a group. In this way, a group formed by a plurality of terminal devices may be referred to as a personal internet of things network. Personal internet of things network members may need to communicate with each other across regions. Therefore, a connection needs to be established between the personal internet of things network members that communicate with each other across regions. A personal internet of things network in a home is used as an example. If a terminal device that moves to a non-local place needs to access a terminal device in the home, a connection between the terminal device and the terminal device in the home needs to be established. Therefore, how to implement cross-region communication between different members in a same personal internet of things network is a technical problem that needs to be resolved.

### SUMMARY

Embodiments of this application provide a communication method and apparatus, to implement cross-region communication between different terminal devices in a same personal internet of things network.

According to a first aspect, this application provides a communication method. The method may be performed by a first user plane function network element, may be performed by a device including the first user plane function network element, or may be performed by a chip (or a chip system) or another functional module. The chip or the functional module can implement a function of the first user plane function network element. For example, the chip or the functional module is disposed in the first user plane function network element. This is not limited.

For example, the first user plane function network element is an execution body. The method may include: The first user plane function network element receives a first data packet from a first terminal device based on a first session, where the first session is a session of a first personal internet of things network; and sends a second data packet to a second user plane function network element based on the first personal internet of things network and a first correspondence, where the first correspondence includes a correspondence between information about the second user plane function network element and information about at least one personal internet of things network served by the second user plane function network element, the at least one personal internet of things network includes the first personal internet of things network, and service data included in the second data packet is the same as service data included in the first data packet.

Optionally, the personal internet of things network may be referred to as a PIN (personal internet of things network), may be referred to as a personal home (or enterprise, or campus) network, or may be referred to as a group network, or the like. A name of the personal internet of things network is not limited in embodiments of this application.

In the foregoing embodiment, the first correspondence includes the correspondence between the information about the second user plane function network element and the information about the at least one personal internet of things network served by the second user plane function network element. In this way, based on a personal internet of things network to which a session belongs and the first correspondence, whether a target user plane function network element of service data received based on the session is the second user plane function network element can be determined. In this embodiment of this application, the first personal internet of things network to which the first session belongs is included in the at least one personal internet of things network. This means that even if the first terminal device and the second terminal device (a target terminal device of the first data packet) that are in the first personal internet of things network are located in different regions, the first user plane function network element may send, based on the first personal internet of things network and the first correspondence, the service data of the first data packet to the second user plane function network element that serves the second terminal device, so that the service data of the first data packet is transmitted to the second terminal device via the second user plane function network element, thereby implementing cross-region communication between different terminal devices in a same personal internet of things network.

In a possible implementation, that the first user plane function network element sends the second data packet to the second user plane function network element based on the first personal internet of things network and the first correspondence may be that the first user plane function network element determines, based on the first personal internet of things network and the first correspondence, that a target user plane function network element of the first data packet is the second user plane function network element; and sends the second data packet to the second user plane function network element based on endpoint information of the second user plane function network element, where the endpoint information of the second user plane function network element is used to transmit service data of the at least one personal internet of things network, and a packet header of the second data packet includes an identifier of the first personal internet of things network. For example, the first user plane function network element may determine the endpoint information of the second user plane function network element, and send the second data packet to the second user plane function network element based on the endpoint information of the second user plane function network element.

Optionally, the endpoint information may include a tunnel endpoint identifier (tunnel endpoint identifier, TEID) and an internet protocol (internet protocol, IP) address. This is not limited.

In the foregoing implementation, the endpoint information of the second user plane function network element may be used to transmit service data of a plurality of personal internet of things networks. This means that the first user plane function network element may implement cross-region communication between a plurality of personal internet of things networks with the second user plane function network element through one tunnel. In comparison with that different tunnels need to be established for different personal internet of things networks during cross-region communication, a quantity of tunnels established between user plane function network elements during cross-region communication can be reduced, facilitating tunnel management. Because a tunnel establishment process consumes network resources, in the foregoing implementation, a quantity of tunnels established between the first user plane function network element and the second user plane function network element can be reduced. Therefore, network resource consumption can be further reduced, and network resource utilization can be improved.

In a possible implementation, the first user plane function network element may further receive a third data packet from the second user plane function network element, where a packet header of the third data packet includes the identifier of the first personal internet of things network; determine the first session based on the identifier of the first personal internet of things network; and send a fourth data packet to the first terminal device based on the first session, where service data included in the fourth data packet is the same as service data included in the third data packet.

In the foregoing implementation, the first user plane function network element may transmit service data from the second user plane function network element to the first terminal device based on the identifier of the first personal internet of things network, to implement cross-region communication between different terminal devices in a same personal internet of things network.

In a possible implementation, the first user plane function network element may further send a fifth data packet to the second user plane function network element, where a packet header of the fifth data packet includes first information and the identifier of the first personal internet of things network, and the first information indicates that the first session of the first personal internet of things network has been released. For example, the first user plane function network element may send the fifth data packet to the second user plane function network element based on the endpoint information of the second user plane function network element.

In the foregoing implementation, the packet header of the fifth data packet includes the first information and the identifier of the first personal internet of things network, and the first information indicates that the first session of the first personal internet of things network has been released, so that the second user plane function network element can release information (for example, a third correspondence) related to the first personal internet of things network in a timely manner, to improve utilization of storage resources.

In a possible implementation, the first user plane function network element may further receive a first message from a session management function network element, where the first message is used to request to establish the first session of the first personal internet of things network; and establish the first session based on the first message. In this way, the first session of the first personal internet of things network can be established. Optionally, the first user plane function network element may store a correspondence between the first session and the first personal internet of things network.

In a possible implementation, the information about the at least one personal internet of things network may include one or more of the following: an identifier of the at least one personal internet of things network, mask information of the at least one personal internet of things network, or a first identifier range, where the identifier of the at least one personal internet of things network belongs to the first identifier range.

In a possible implementation, the information about the second user plane function network element may include one or more of the following: an identifier of the second user plane function network element, domain name information of the second user plane function network element, or address information of the second user plane function network element.

According to a second aspect, this application provides a communication method. The method may be performed by a first user plane function network element, may be performed by a device including the first user plane function network element, or may be performed by a chip (or a chip system) or another functional module. The chip or the functional module can implement a function of the first user plane function network element. For example, the chip or the functional module is disposed in the first user plane function network element. This is not limited.

For example, the first user plane function network element is an execution body. The method may include: The first user plane function network element receives a first data packet from a first terminal device based on a first session, where the first session is a session of a first data network, and the first session is a session of a first personal internet of things network; and sends a second data packet to the second user plane function network element based on the first data network and a second correspondence, where the second correspondence includes a correspondence between information about the second user plane function network element and information about at least one data network supported by the second user plane function network element, the at least one data network includes the first data network, and service data included in the second data packet is the same as service data included in the first data packet.

In the foregoing embodiment, the second correspondence includes the correspondence between the information about the second user plane function network element and the information about the at least one data network supported by the second user plane function network element. In this way, based on a data network to which a session belongs and the second correspondence, whether a target user plane function network element of service data received based on the session is the second user plane function network element can be determined. In this embodiment of this application, the first data network to which the first session belongs is included in the at least one data network. This means that even if the first terminal device and the second terminal device (a target terminal device of the first data packet) that are in the first personal internet of things network are located in different regions, the first user plane function network element may send, based on the first data network and the second correspondence, the service data of the first data packet to the second user plane function network element that serves the second terminal device, so that the service data of the first data packet is transmitted to the second terminal device via the second user plane function network element, thereby implementing cross-region communication between different terminal devices in a same personal internet of things network.

In a possible implementation, that the first user plane function network element sends the second data packet to the second user plane function network element based on the first data network and the second correspondence may be that the first user plane function network element determines, based on the first data network and the second correspondence, that a target user plane function network element of the first data packet is the second user plane function network element; and sends the second data packet to the second user plane function network element based on endpoint information of the second user plane function network element, where the endpoint information of the second user plane function network element is used to transmit service data of at least one personal internet of things network, the at least one personal internet of things network includes the first personal internet of things network, and a packet header of the second data packet includes an identifier of the first personal internet of things network. For example, the first user plane function network element may determine the endpoint information of the second user plane function network element, and send the second data packet to the second user plane function network element based on the endpoint information of the second user plane function network element.

In a possible implementation, the first user plane function network element may further receive a third data packet from the second user plane function network element, where a packet header of the third data packet includes the identifier of the first personal internet of things network; determine the first session based on the identifier of the first personal internet of things network; and send a fourth data packet to the first terminal device based on the first session, where service data included in the fourth data packet is the same as service data included in the third data packet.

In a possible implementation, the first user plane function network element may further send a fifth data packet to the second user plane function network element, where a packet header of the fifth data packet includes first information and the identifier of the first personal internet of things network, and the first information indicates that the first session of the first personal internet of things network has been released.

In a possible implementation, the first user plane function network element may further receive a first message from a session management function network element, where the first message is used to request to establish the first session of the first personal internet of things network, and the first message includes an identifier of the first data network; and establish the first session based on the first message. Optionally, the first user plane function network element may further store a correspondence between the first data network and the first session.

In a possible implementation, the information about the at least one data network may include one or more of the following: an identifier of the at least one data network, mask information of the at least one data network, or a second identifier range, where the identifier of the at least one data network belongs to the second identifier range.

In a possible implementation, the information about the second user plane function network element may include one or more of the following: an identifier of the second user plane function network element, domain name information of the second user plane function network element, or address information of the second user plane function network element.

For technical effects that can be achieved in any one of the possible implementations of the second aspect, correspondingly refer to the technical effects that can be achieved in any one of the possible implementations of the first aspect. Details are not described again.

According to a third aspect, this application provides a communication method. The method may be performed by a second user plane function network element, may be performed by a device including the second user plane function network element, or may be performed by a chip (or a chip system) or another functional module. The chip or the functional module can implement a function of the second user plane function network element. For example, the chip or the functional module is disposed in the second user plane function network element. This is not limited.

For example, the second user plane function network element is an execution body. The method may include: The second user plane function network element receives a second data packet from a first user plane function network element, where a packet header of the second data packet includes an identifier of a first personal internet of things network; determines a third correspondence, where the third correspondence includes a correspondence between the identifier of the first personal internet of things network and information about the first user plane function network element; and sends a sixth data packet to a second terminal device based on the identifier of the first personal internet of things network, where service data included in the sixth data packet is the same as service data included in the second data packet.

In the foregoing embodiment, the second user plane function network element may send service data of the first user plane function network element to the second terminal device, to implement cross-region communication between different terminal devices in a same personal internet of things network. In addition, the second user plane function network element determines the third correspondence. In this way, the service data may be sent to the first user plane function network element by using the third correspondence, to implement cross-region communication between different terminal devices in a same personal internet of things network.

In a possible implementation, the second user plane function network element may further receive a seventh data packet from the second terminal device, where the seventh data packet includes the identifier of the first personal internet of things network; and send a third data packet to the first user plane function network element based on the identifier of the first personal internet of things network and the third correspondence, where a packet header of the third data packet includes the identifier of the first personal internet of things network, and service data included in the third data packet is the same as service data included in the seventh data packet.

In a possible implementation, that the second user plane function network element sends the third data packet to the first user plane function network element based on the identifier of the first personal internet of things network and the third correspondence may be that the second user plane function network element determines, based on the identifier of the first personal internet of things network and the third correspondence, that a target user plane function network element of the seventh data packet is the first user plane function network element; and sends the third data packet to the first user plane function network element based on endpoint information of the first user plane function network element, where the endpoint information of the first user plane function network element is used to transmit service data of at least one personal internet of things network, and the at least one personal internet of things network includes the first personal internet of things network. For example, the second user plane function network element may determine the endpoint information of the first user plane function network element, and send the third data packet to the first user plane function network element based on the endpoint information of the first user plane function network element.

In a possible implementation, the second user plane function network element may further receive a fifth data packet from the first user plane function network element, where a packet header of the fifth data packet includes first information and the identifier of the first personal internet of things network, and the first information indicates that a first session of the first personal internet of things network has been released; and delete the third correspondence based on the first information.

In a possible implementation, that the first user plane function network element sends the sixth data packet to the second terminal device based on the identifier of the first personal internet of things network may be that the first user plane function network element determines a second session of the first personal internet of things network based on the identifier of the first personal internet of things network; and sends the sixth data packet to the second terminal device based on the second session.

In a possible implementation, the information about the first user plane function network element may include one or more of the following: an identifier of the first user plane function network element, domain name information of the first user plane function network element, or address information of the first user plane function network element.

For technical effects that can be achieved in any one of the possible implementations of the third aspect, correspondingly refer to the technical effects that can be achieved in any one of the possible implementations of the first aspect. Details are not described again.

According to a fourth aspect, this application provides a communication method. The method may be performed by a first user plane function network element, may be performed by a device including the first user plane function network element, or may be performed by a chip (or a chip system) or another functional module. The chip or the functional module can implement a function of the first user plane function network element. For example, the chip or the functional module is disposed in the first user plane function network element. This is not limited.

For example, the first user plane function network element is an execution body. The method may include: The first user plane function network element receives a first data packet from a first terminal device based on a first session, where the first session is a session of a first personal internet of things network; and sends an eighth data packet to a second terminal device based on the first personal internet of things network and a first correspondence, where the first correspondence includes a correspondence between information about the first user plane function network element and information about at least one personal internet of things network served by the first user plane function network element, the at least one personal internet of things network served by the first user plane function network element includes the first personal internet of things network, and service data included in the eighth data packet is the same as service data included in the first data packet.

In the foregoing embodiment, the first correspondence includes the correspondence between the information about the first user plane function network element and the information about the at least one personal internet of things network served by the first user plane function network element. In this way, based on a personal internet of things network to which a session belongs and the first correspondence, whether a target user plane function network element of service data received based on the session is the first user plane function network element can be determined, to implement intra-region communication between different terminal devices in a same personal internet of things network.

In a possible implementation, that the first user plane function network element sends the eighth data packet to the second terminal device based on the first personal internet of things network and the first correspondence may be that the first user plane function network element determines, based on the first personal internet of things network and the second correspondence, that a target user plane function network element of the first data packet is the first user plane function network element; determines a third session of the first personal internet of things network; and sends the eighth data packet to the second terminal device based on the third session. For example, the first user plane function network element may determine the third session based on an identifier of the first personal internet of things network.

In a possible implementation, the first user plane function network element may further receive a first message from a session management function network element, where the first message is used to request to establish the first session of the first personal internet of things network; and establish the first session based on the first message. In this way, the first session of the first personal internet of things network can be established. Optionally, the first user plane function network element may store a correspondence between the first session and the first personal internet of things network.

In a possible implementation, the information about the at least one personal internet of things network may include one or more of the following: an identifier of the at least one personal internet of things network, mask information of the at least one personal internet of things network, or a first identifier range, where the identifier of the at least one personal internet of things network belongs to the first identifier range.

In a possible implementation, the information about the first user plane function network element may include one or more of the following: an identifier of the first user plane function network element, domain name information of the first user plane function network element, or address information of the first user plane function network element.

For technical effects that can be achieved in any one of the possible implementations of the fourth aspect, correspondingly refer to the technical effects that can be achieved in any one of the possible implementations of the first aspect. Details are not described again.

According to a fifth aspect, this application provides a communication method. The method may be performed by a first user plane function network element, may be performed by a device including the first user plane function network element, or may be performed by a chip (or a chip system) or another functional module. The chip or the functional module can implement a function of the first user plane function network element. For example, the chip or the functional module is disposed in the first user plane function network element. This is not limited.

For example, the first user plane function network element is an execution body. The method may include: The first user plane function network element receives a first data packet from a first terminal device based on a first session, where the first session is a session of a first data network, and the first session is a session of a first personal internet of things network; and sends an eighth data packet to a second terminal device based on the first data network and a second correspondence, where the second correspondence includes a correspondence between information about the first user plane function network element and information about at least one data network supported by the first user plane function network element, the at least one data network supported by the first user plane function network element includes the first data network, and service data included in the eighth data packet is the same as service data included in the first data packet.

In the foregoing embodiment, the second correspondence includes the correspondence between the information about the first user plane function network element and the information about the at least one data network supported by the first user plane function network element. In this way, based on a data network to which a session belongs and the second correspondence, whether a target user plane function network element of service data received based on the session is the first user plane function network element can be determined, to implement intra-region communication between different terminal devices in a same personal internet of things network.

In a possible implementation, that the first user plane function network element sends the eighth data packet to the second terminal device based on the first data network and the second correspondence may be that the first user plane function network element determines, based on the first data network and the second correspondence, that a target user plane function network element of the first data packet is the first user plane function network element; determines a third session of the first personal internet of things network; and sends the eighth data packet to the second terminal device based on the third session. For example, the first user plane function network element may determine the third session based on an identifier of the first personal internet of things network.

In a possible implementation, the first user plane function network element may further receive a first message from a session management function network element, where the first message is used to request to establish the first session of the first personal internet of things network, and the first message includes an identifier of the first data network; and establish the first session based on the first message. In this way, the first session of the first personal internet of things network can be established. Optionally, the first user plane function network element may further store a correspondence between the first data network and the first session.

In a possible implementation, the information about the at least one data network may include one or more of the following: an identifier of the at least one data network, mask information of the at least one data network, or a second identifier range, where the identifier of the at least one data network belongs to the second identifier range.

In a possible implementation, the information about the first user plane function network element may include one or more of the following: an identifier of the first user plane function network element, domain name information of the first user plane function network element, or address information of the first user plane function network element.

For technical effects that can be achieved in any one of the possible implementations of the fifth aspect, correspondingly refer to the technical effects that can be achieved in any one of the possible implementations of the first aspect. Details are not described again.

According to a sixth aspect, this application provides a communication apparatus. The communication apparatus may be configured to perform the method according to any one of the first aspect, the second aspect, the fourth aspect, the fifth aspect, or the possible implementations of the first aspect, the second aspect, the fourth aspect, or the fifth aspect. The communication apparatus may be, for example, a first user plane function network element.

In a possible implementation, the communication apparatus may include a baseband apparatus and a radio frequency apparatus.

In another possible implementation, the communication apparatus may include a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to a seventh aspect, this application provides a communication apparatus. The communication apparatus may be configured to perform the method according to any one of the third aspect and the possible implementations of the third aspect. The communication apparatus may be, for example, a second user plane function network element communication apparatus.

In a possible implementation, the communication apparatus may include a baseband apparatus and a radio frequency apparatus.

In another possible implementation, the communication apparatus may include a processing module (sometimes also referred to as a processing unit) and a transceiver module (sometimes also referred to as a transceiver unit). The transceiver module can implement a sending function and a receiving function. When implementing the sending function, the transceiver module may be referred to as a sending module (sometimes also referred to as a sending unit). When implementing the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

According to an eighth aspect, this application provides a communication system. The communication system includes one or more of the following: the communication apparatus according to the sixth aspect or the communication apparatus according to the seventh aspect.

According to a ninth aspect, this application further provides a communication apparatus. The communication apparatus may include one or more processors, configured to perform the method according to any one of the first aspect to the fifth aspect and the possible implementations of the first aspect to the fifth aspect.

Optionally, the communication apparatus may further include a memory. The memory is configured to store one or more computer programs or instructions. The one or more processors are configured to execute the one or more computer programs or instructions stored in the memory, to cause the communication apparatus to perform the method according to any one of the first aspect to the fifth aspect and the possible implementations of the first aspect to the fifth aspect.

According to a tenth aspect, this application further provides a computer-readable storage medium. The computer-readable storage medium is configured to store a computer program, and when the computer program is run on a computer, the computer is caused to perform the method according to any one of the first aspect to the fifth aspect and the possible implementations of the first aspect to the fifth aspect.

According to an eleventh aspect, this application further provides a computer program product. The computer program product includes a computer program, and when the computer program is run on a computer, the computer is caused to perform the method according to any one of the first aspect to the fifth aspect and the possible implementations of the first aspect to the fifth aspect.

According to a twelfth aspect, this application further provides a chip system. The chip system includes a processor, configured to perform the method according to any one of the first aspect to the fifth aspect and the possible implementations of the first aspect to the fifth aspect. Optionally, the chip system may include a chip, or the chip system may include a chip and another discrete device.

For technical effects that can be achieved in any one of the sixth aspect to the twelfth aspect and the possible implementations of the sixth aspect to the twelfth aspect, correspondingly refer to the technical effects that can be achieved in any one of the first aspect to the fifth aspect and the possible implementations of the first aspect to the fifth aspect. Details are not described again.

### BRIEF DESCRIPTION OF DRAWINGS

FIG. 1a is a diagram of a 5G network architecture based on a service-oriented architecture;
FIG. 1b is a diagram of a 5G network architecture based on point-to-point interfaces;
FIG. 1c is a diagram of another 5G network architecture based on point-to-point interfaces;
FIG. 2a is a diagram of an architecture of cross-region communication according to an embodiment of this application;
FIG. 2b is a diagram of another architecture of cross-region communication according to an embodiment of this application;
FIG. 3 is a schematic flowchart of a communication method according to an embodiment of this application;
FIG. 4a and FIG. 4b are a schematic flowchart of a communication method according to an embodiment of this application;
FIG. 5 is a schematic flowchart of a communication method according to an embodiment of this application;
FIG. 6a and FIG. 6b are a schematic flowchart of a communication method according to an embodiment of this application;
FIG. 7 is a diagram of a communication apparatus according to an embodiment of this application;
FIG. 8 is a diagram of another communication apparatus according to an embodiment of this application; and
FIG. 9 is a diagram of still another communication apparatus according to an embodiment of this application.

### DESCRIPTION OF EMBODIMENTS

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of a new service scenario, the technical solutions provided in embodiments of this application are also applicable to a similar technical problem. For example, the technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, or a 5th generation (5th generation, 5G) communication system or new radio (new radio, NR) system, or applied to a future communication system or another similar communication system. In embodiments of this application, the 5G mobile communication system is used as an example for description. When the technical solutions in embodiments of this application are applied to another communication system, devices, components, modules, and the like in embodiments may be replaced with corresponding devices, components, and modules in the another communication system. This is not limited.

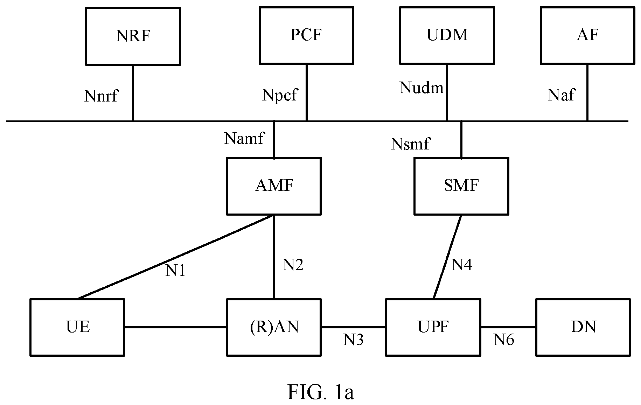

FIG. 1a provides a network architecture of a 5G communication system based on a service-oriented architecture. The network architecture may include a user equipment (user equipment, UE) and an operator network part. The network architecture may further include a data network (data network, DN) and/or an application function (application function, AF) network element.

The UE, also referred to as a terminal device (terminal device), a terminal, or the like, is a device having a wireless transceiver function, and may be deployed on land, including being deployed indoors or outdoors, and being deployed to be handheld or vehicle-mounted; or may be deployed on a water surface (for example, on a ship); or may be deployed in the air (for example, on an aircraft, a balloon, or a satellite). Specifically, the UE may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in an internet of things (internet of things, IoT) (for example, a terminal device in a smart factory or a terminal device in smart manufacturing), a terminal device supporting sparklink (sparklink) short-range communication technologies, or the like.

The operator network may include but is not limited to one or more of the following network elements: a network repository function network element, an access management function network element, a policy control function network element, a unified data management network element, a session management function network element, a user plane function network element, an access network (access network, AN), and the like. In the operator network, a part other than the access network part may be referred to as a core network (core network, CN) part. In a possible implementation, the operator network may further include an AF.

The terminal device may establish a connection to the operator network through an interface (for example, N1) provided by the operator network, and use a service such as data and/or voice provided by the operator network. The terminal device may further access the DN via the operator network, and use an operator service deployed on the DN and/or a service provided by a third party. The third party may be a service party other than the operator network and the terminal device, and may provide services such as a data service and/or a voice service for the terminal device. A representation form of the third party may be determined based on an actual application scenario, and is not limited herein.

The following describes some network elements in the core network.

The network repository function network element is responsible for providing a network element discovery function, and providing, based on a request of another network element, network element information corresponding to a network element type. Optionally, the network repository function network element may further provide a network element management service, for example, network element registration, update, and de-registration, and network element status subscription and push. In the 5G communication system, the network repository function network element may be a network repository function (network repository function, NRF) network element. In the future communication system, the network repository function network element may have another name. This is not limited.

The access management function network element is responsible for access control, mobility management, and the like for accessing the operator network by the terminal device, for example, functions such as mobility status management, allocation of a temporary user identifier, and authentication and authorization. In the 5G communication system, the access management function network element may be an access and mobility management function (access and mobility management function, AMF) network element. In the future communication system, the access management function network element may have another name. This is not limited.

The unified data management network element is responsible for generation of authentication credentials, user identification handling (for example, storage and management of a subscription permanent identifier), and subscription data management, and the like. In the 5G communication system, the unified data management network element may be a unified data management (unified data management, UDM) network element. In the future communication system, the unified data management network element may have another name. This is not limited.

The session management function network element is mainly responsible for session management in a mobile network, for example, session establishment, modify and release. The session management function network element may further allocate an internet protocol (internet protocol, IP) address to a user, select a user plane function network element that provides a packet forwarding function, and the like. In the 5G communication system, the session management function network element may be a session management function (session management function, SMF) network element. In the future communication system, the session management function network element may have another name. This is not limited.

The policy control function network element mainly provides policy rules and is responsible for obtaining user subscription information relevant for policy decisions. In a 4G communication system, the policy control function network element may be a policy and charging rules function (policy and charging rules function, PCRF) network element. In the 5G communication system, the policy control function network element may be a policy control function (policy control function, PCF) network element. In the future communication system, the policy control function network element may have another name. This is not limited. PCFs connected to an AMF and an SMF respectively correspond to an AM PCF (PCF for access and mobility control) and an SM PCF (PCF for session management), and may not be a same PCF entity in an actual deployment scenario.

The user plane function network element is responsible for reception and forwarding of user data. For example, the user plane function network element may receive user data from the DN, and transmit the user data to the terminal device via an access network device. The user plane function network element may further receive user data from the terminal device via the access network device, and forward the user data to the DN. In the 5G communication system, the user plane function network element may be a user plane function (user plane function, UPF) network element. In the future communication system, the user plane function network element may have another name. This is not limited.

The AN includes an AN device. The AN device is configured to connect the terminal device to a wireless network. As a node in an access network, the AN device may also be referred to as an access network element, a base station, a radio access network (radio access network, RAN) node (device or network element), an access point (access point, AP), a small tower, or the like, for example, a next generation NodeB (next generation NodeB, gNB) in the 5G communication system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home base station (home NodeB, HNB), a baseband unit (baseband unit, BBU), a wireless fidelity (wireless fidelity, Wi-Fi) access point, a transmission reception point (transmission reception point, TRP), a transmission point (transmission point, TP), or a mobile switching center.

It should be noted that, in communication systems using different radio access technologies, devices having a base station function may be different. For example, in the 5G communication system, the device may be referred to as a gNB or a 5G NodeB; in the LTE system, the device may be referred to as an evolved NodeB (evolved NodeB, eNB or eNodeB); and in a 3rd generation (3rd generation, 3G) communication system, the device is referred to as a NodeB (NodeB).

The DN is a network located outside the mobile communication system, and may provide a service for a user. For example, the DN may be a packet data network (packet data network, PDN), for example, the internet (Internet), an internet protocol multi-media service (internet protocol multi-media service, IMS) network, a data network dedicated to some applications, the Ethernet, or an internet protocol (internet protocol, IP) local network. A plurality of services may be deployed on the DN, to provide services such as a data service and/or a voice service for the terminal device. The DN may include a plurality of application servers (application servers, ASs), and each AS may provide at least one service.

The AF mainly transfers a requirement of an application side on a network side, for example, a quality of service (quality of service, QoS) requirement or user status event subscription. The AF may be a third-party functional entity, or may be an application service deployed by an operator, for example, an IMS voice call service.

As shown above, FIG. 1a mainly describes network elements that may be used in embodiments of this application. The communication system shown in FIG. 1a may further include another network element. For example, the core network may further include one or more of the following: a unified data repository (unified data repository, UDR) network element, a network slice selection function (network slice selection function, NSSF) network element, an authentication server function (authentication server function, AUSF) network element, a network exposure function (network exposure function, NEF) network element, or the like, which are not shown in FIG. 1a.

In FIG. 1a, Nnrf, Namf, Npcf, Nsmf, Nudm, Naf, N1, N2, N3, N4, and N6 are interface serial numbers. For meanings of the interface serial numbers, refer to meanings defined in the 3rd generation partnership project (3rd generation partnership project, 3GPP) standard protocol. This is not limited herein.

The 5G network architecture supports access to a core network by using a radio access technology (radio access technology, RAT) defined by the 3GPP. The RAT defined by the 3GPP includes long term evolution (long term evolution, LTE), 5G RAN, and the like. The 5G network architecture further supports access to the core network by using a non-3GPP (non-3GPP, N3G) access technology through a non-3GPP interworking function (non-3GPP interworking function, N3IWF) or a next generation access gateway (next generation packet data gateway, ngPDG).

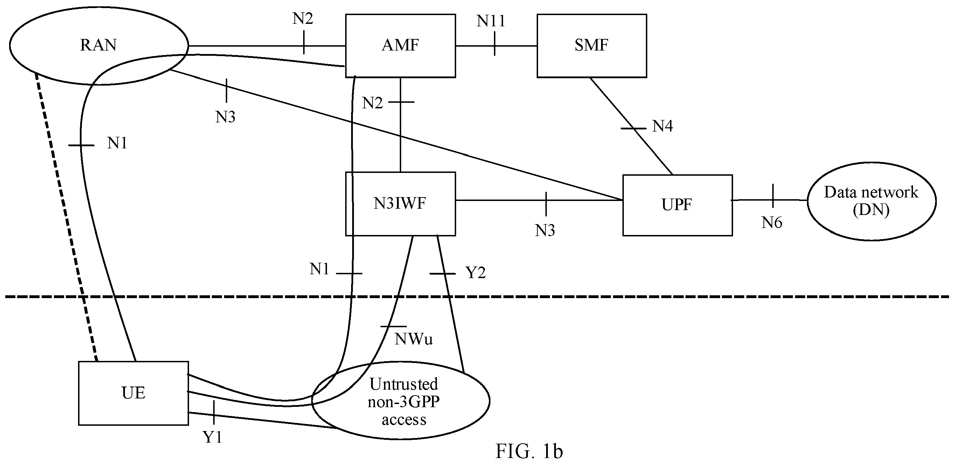

When a 5G core network supports untrusted non-3GPP access, a 5G network architecture based on point-to-point interfaces is shown in FIG. 1b. The access network includes a 3GPP access network and an untrusted non-3GPP access network. An access device in the 3GPP access network may be referred to as a RAN device. An access device in the untrusted non-3GPP access network may be referred to as an N3IWF device. The N3IWF device may include, for example, a router.

FIG. 1b is a diagram of a 5G network architecture based on point-to-point interfaces. For descriptions of functions of network elements in FIG. 1b, refer to the descriptions of the functions of corresponding network elements in FIG. 1a. Details are not described again. A main difference between FIG. 1b and FIG. 1a lies in that interfaces between the network elements in FIG. 1b are point-to-point interfaces, and interfaces between the network elements in FIG. 1a are service-oriented interfaces. In FIG. 1b, N1, N2, N3, N4, N6, N11, NWu, and Y1 are interface serial numbers. For meanings of the interface serial numbers, refer to meanings defined in the 3GPP standard protocol. This is not limited herein.

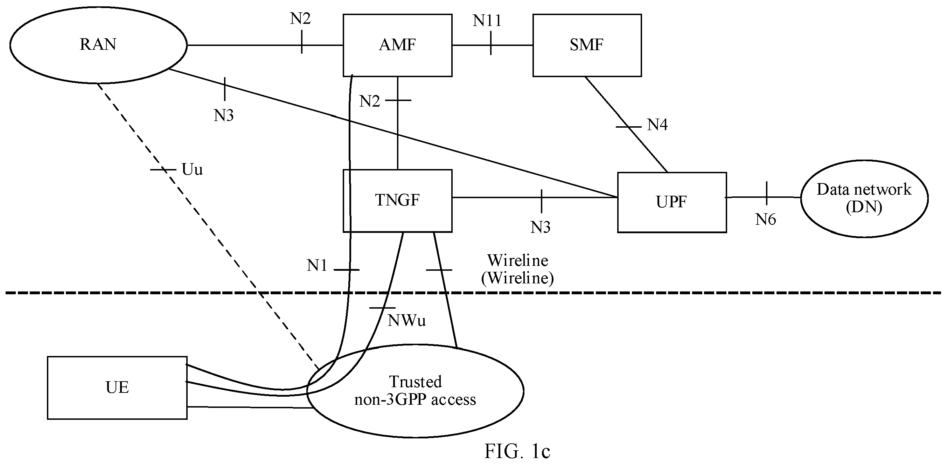

When the 5G core network supports trusted non-3GPP access and/or wired network access, a 5G network architecture based on point-to-point interfaces is shown in FIG. 1c. If the 5G core network supports trusted non-3GPP access, the access network includes a 3GPP access network and a trusted non-3GPP access network, and an access device in the trusted non-3GPP access network may be referred to as a trusted non-3GPP access gateway (trusted non-3GPP gateway function, TNGF). If the 5G core network supports the wired network access, the access network includes a 3GPP access network and a wired network, for example, a fixed home network, and a TNGF is replaced with a wired network access gateway (wireline access gateway function, W-AGF) (not shown in FIG. 1c). An access network device between the UE and the access gateway may include a WLAN access point, a fixed access network (fixed access network, FAN) device, a switch, a router, and the like.

FIG. 1c is a diagram of a 5G network architecture based on point-to-point interfaces. For descriptions of functions of network elements in FIG. 1c, refer to the descriptions of the functions of corresponding network elements in FIG. 1a. Details are not described again. A main difference between FIG. 1c and FIG. 1a lies in that interfaces between the network elements in FIG. 1c are point-to-point interfaces, and interfaces between the network elements in FIG. 1a are service-oriented interfaces. In FIG. 1c, N1, N2, N3, N6, N11, NWu, and Uu are interface serial numbers. For meanings of the interface serial numbers, refer to meanings defined in the 3GPP standard protocol. This is not limited herein.

It can be learned that the core network may use the 3GPP access core network architecture and the service interface shown in FIG. 1a, or may use the network architecture and the point-to-point interface protocol shown in FIG. 1b or FIG. 1c.

It may be understood that the network elements or functions shown in any one of the communication architectures in FIG. 1a, FIG. 1b, and FIG. 1c may be network elements in a hardware device, software functions running on dedicated hardware, or virtualized functions instantiated on a platform (for example, a cloud platform). In a possible implementation, the network elements or functions may be implemented by one device, or may be jointly implemented by a plurality of devices, or may be implemented by one functional module in one device. This is not limited herein.

In addition, for ease of description, "network element" may be omitted from a device name mentioned in this application. For example, the SMF network element and the SMF represent a same meaning. For another example, the UPF network element and the UPF represent a same meaning.

It should be understood that a communication system shown in any one of FIG. 1a, FIG. 1b, and FIG. 1c does not constitute a limitation on a communication system to which embodiments of this application are applicable. A communication method provided in embodiments of this application may be further applicable to various communication systems, for example, an LTE communication system, a 5G communication system, a 6G communication system, a future communication system, vehicle to everything (vehicle to everything, V2X), LTE-vehicle (LTE-vehicle, LTE-V), and vehicle to vehicle (vehicle to vehicle, V2V), internet of vehicles, machine type communication (machine type communication, MTC), IoT, LTE-machine to machine (LTE-machine to machine, LTE-M), machine to machine (machine to machine, M2M), and internet of things.

In addition, names of network elements in the communication system are not limited in embodiments of this application. For example, in communication systems of different standards, the network elements may have other names. For another example, when a plurality of network elements are integrated into a same physical device, the physical device may alternatively have another name.

The following describes technical features in embodiments of this application.

In a personal service to consumer, a plurality of terminal devices may form a group, for example, various terminal devices in a home form a group. Similarly, in a service to business, a plurality of terminal devices may also form a group, for example, terminal devices of enterprise employees form a group. In this way, a group formed by a plurality of terminal devices may be referred to as a personal internet of things network. In other words, the personal internet of things network may be understood as a network including at least one terminal device, may be understood as a subnet including at least one terminal device, or may be understood as a group including at least one terminal device. For example, the personal internet of things network may be a network including at least one terminal device in a home. For another example, the personal internet of things network may be a network including at least one terminal device in an enterprise (or a campus). The personal internet of things network may be referred to as a PIN (personal internet of things network), a personal home (or enterprise, or campus) network, a group network, a subnet, networking, a PIN subnet, a PIN group, or the like. A name of the personal internet of things network is not limited in embodiments of this application. For ease of description, the following uses an example in which the personal internet of things network is referred to as the PIN for description.

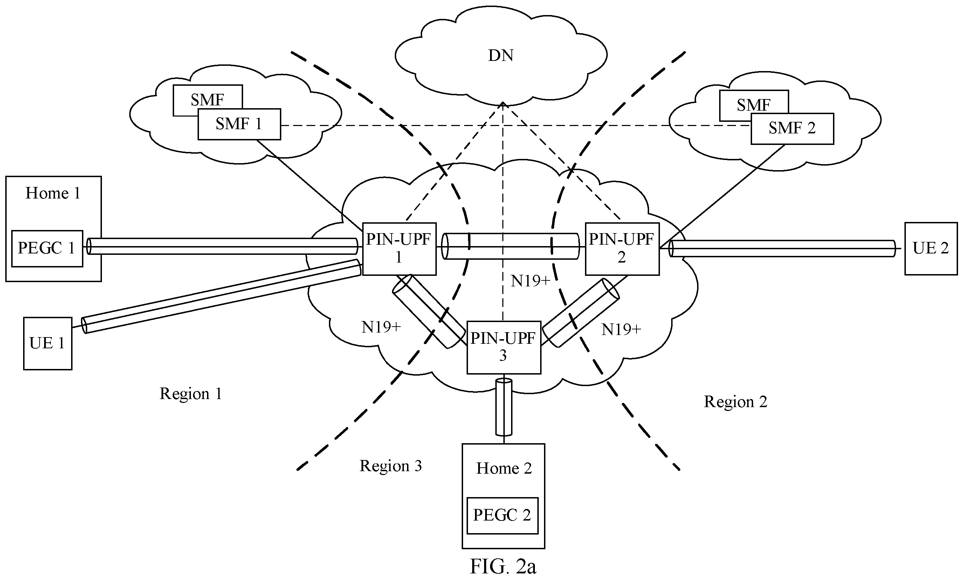

FIG. 2a provides a network architecture of a cross-region communication system. In FIG. 2a, a PIN in a home is used as an example. Optionally, the home may be replaced with a campus, an enterprise, or the like. In comparison with the system architecture shown in FIG. 1a, FIG. 1b, or FIG. 1c, the system mainly enhances a function of a UPF.

An enhanced UPF is mainly responsible for reception and forwarding of user data of a PIN in an entire public land mobile network (public land mobile network, PLMN), or is responsible for reception and forwarding of user data of all or some PINs in one region in the PLMN. The enhanced UPF may still be referred to as a UPF, may be referred to as a PIN-UPF, or may be referred to as an X-UPF. A name of the enhanced UPF is not limited in this embodiment of this application. For ease of description, the following uses the PIN-UPF as an example for description. One or more PIN-UPFs may be deployed in the PLMN. This is not limited. Without special description, the following uses an example in which a plurality of PIN-UPFs are deployed in the PLMN. One or more PIN-UPFs may be deployed in one region. This is not limited. In FIG. 2a, an example in which one PIN-UPF is deployed in one region is used. For example, a PIN-UPF 1 is deployed in a region 1, and is responsible for reception and forwarding of user data of all PINs in the region 1. A PIN-UPF 2 is deployed in a region 2, and is responsible for reception and forwarding of user data of all PINs in the region 2. A PIN-UPF 3 is deployed in a region 3, and is responsible for reception and forwarding of user data of all PINs in the region 3. A connection, for example, an N19 connection, may be established between PIN-UPFs in different regions, to implement cross-region communication. A connection may be established or may not be established between a PIN-UPF and a DN, which is represented by a dashed line in FIG. 2a.

One or more SMFs may be deployed in one region, and are responsible for session management of a PIN in the region. The SMF deployed in the region may still be referred to as an SMF, may be referred to as a local (local) SMF (denoted as an L-SMF), or may be referred to as an X-SMF. A name of the SMF deployed in the region is not limited in this embodiment of this application. For ease of differentiation, the following uses the SMF as an example for description. A connection may be established between a plurality of SMFs in one region. A connection may be established or may not be established between a plurality of SMFs in different regions, which is represented by a dashed line in FIG. 2a. A connection may be established between a PIN-UPF and an SMF in a region served by the PIN-UPF.

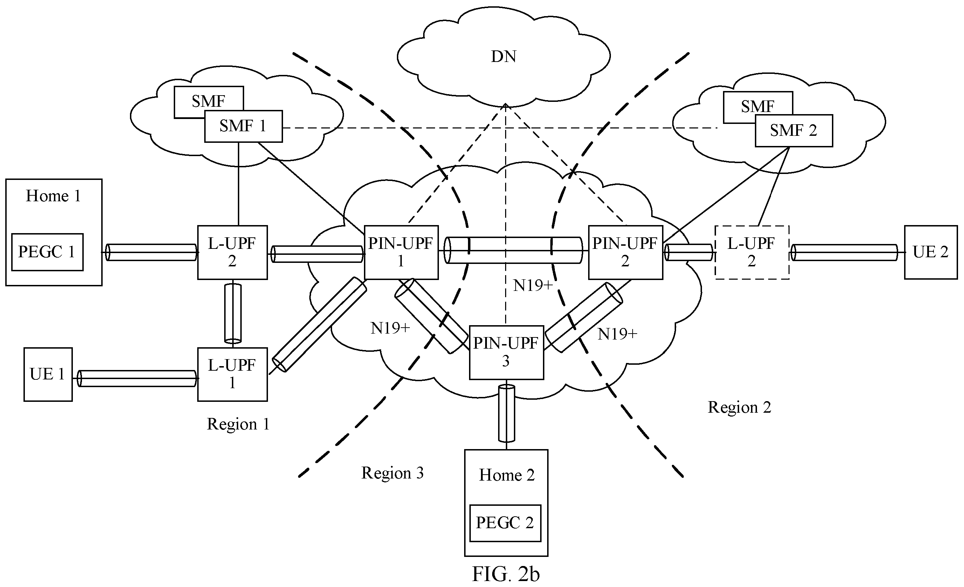

In a possible implementation, one or more UPFs may be further deployed in one region, and are responsible for reception and forwarding of user data of a PIN in the region, as shown in FIG. 2b. The UPF deployed in the region may still be referred to as a UPF, or may be referred to as a local (local) UPF (denoted as an L-UPF). A name of the UPF deployed in the region is not limited in this embodiment of this application. For ease of differentiation, the following uses the L-UPF as an example. A connection, for example, an N19 connection, may be established or may not be established between a plurality of L-UPFs in one region. This is not limited. A connection, for example, an N19 connection, may be established between a PIN-UPF and an L-UPF in a region served by the PIN-UPF.

It should be noted that N19 is an interface serial number. For a meaning of N19, refer to a meaning defined in the 3GPP standard protocol. This is not limited. In this embodiment of this application, an interface between PIN-UPFs may still be referred to as an N19 interface, may be referred to as an N19+ interface, may be referred to as an N20 interface, or may be referred to as an Nx interface. This is not limited. N19+ is used as an example in FIG. 2a and FIG. 2b.

It should be noted that the communication systems shown in FIG. 2a and FIG. 2b may further include another network element, for example, an AMF, a UDM, a UDR, or an NRF. For details, refer to the communication system shown in any one of FIG. 1a, FIG. 1b, or FIG. 1c. Details are not described again. In FIG. 2a and FIG. 2b, division of the region 1, the region 2, and the region 3 is represented by bold dashed lines. In addition, a division rule of all regions is not limited in this application.

PIN members may need to communicate with each other across regions. Therefore, a connection needs to be established between the PIN members that communicate with each other across regions. A PIN in a home is used as an example. If a terminal device that moves to a non-local place needs to access a terminal device in the home, a connection between the terminal device and the terminal device in the home needs to be established. For example, it is assumed that a PIN network gateway function device (PIN element with gateway capability, PEGC) 1 and a UE 2 in FIG. 2a or FIG. 2b are members in a PIN 1. The UE 2 moves from the region 1 to the region 2. When the UE 2 needs to communicate with the PEGC 1, a connection needs to be established between the UE 2 and the PEGC 1. Therefore, how to implement cross-region communication between different members in a same PIN is a technical problem that needs to be resolved.

In view of this, embodiments of this application provide a communication method and apparatus, to implement cross-region communication between different terminal devices in a same PIN. The method may be applied to the communication system shown in any one of FIG. 1a, FIG. 1b, FIG. 1c, FIG. 2a, or FIG. 2b, but is not limited thereto. The following first describes technical terms in embodiments of this application.

For ease of description, a first user plane function network element is represented as a first UPF, a second user plane function network element is represented as a second UPF, a session management function network element is represented as an SMF, and an access management function network element is represented as an AMF in the following.

The first UPF may be a PIN-UPF or a component in the PIN-UPF in the network architecture shown in FIG. 2a or FIG. 2b, or may be an L-UPF or a component in the L-UPF in the network architecture shown in FIG. 2b. This is not limited. For ease of understanding of embodiments of this application, without special description, the following uses an example in which the first UPF is the PIN-UPF in the network architecture shown in FIG. 2a or FIG. 2b.

A first SMF may be an SMF or a component in the SMF in the network architecture shown in FIG. 2a or FIG. 2b. This is not limited. The first SMF and the first UPF are located in a same region.

The second UPF may be a PIN-UPF or a component in the PIN-UPF in the network architecture shown in FIG. 2a or FIG. 2b, or may be an L-UPF or a component in the L-UPF in the network architecture shown in FIG. 2b. This is not limited. If the second UPF is the PIN-UPF (or the component in the PIN-UPF), the second UPF and the first UPF are located in different regions. For ease of understanding of embodiments of this application, without special description, the following uses an example in which the second UPF is the PIN-UPF in the network architecture shown in FIG. 2a or FIG. 2b.

In embodiments of this application, a connection established between UPFs may be referred to as a tunnel, may be referred to as a channel, may be referred to as a transmission path, or the like. This is not limited. The tunnel may be a general packet radio service tunnel protocol-user plane (general packet radio service tunnel protocol, GTP-U) tunnel, or may be a tunnel defined by another protocol. This is not limited. For ease of understanding, the following uses the tunnel as an example.

For ease of description, in embodiments of this application, a tunnel established between the first UPF and the second UPF is referred to as a first tunnel. The first tunnel may be used to transmit service data of one PIN or used to transmit service data of a plurality of PINs. For example, if the first UPF and the second UPF are two L-UPFs in a same region or an L-UPF and a PIN-UPF in a same region, the first tunnel may be used to transmit service data of one PIN. Alternatively, if the first UPF and the second UPF are PIN-UPFs in different regions, the first tunnel may be used to transmit service data of one PIN or used to transmit service data of a plurality of PINs. It should be noted that a region division rule is not limited in embodiments of this application.

The term "PIN" in embodiments of this application may be replaced with "personal internet of things network", "service data of at least one PIN" may be replaced with "service data of one PIN or service data of a plurality of PINs", and "service data of a data packet" may be replaced with "service data included in a data packet". Details are not described below again.

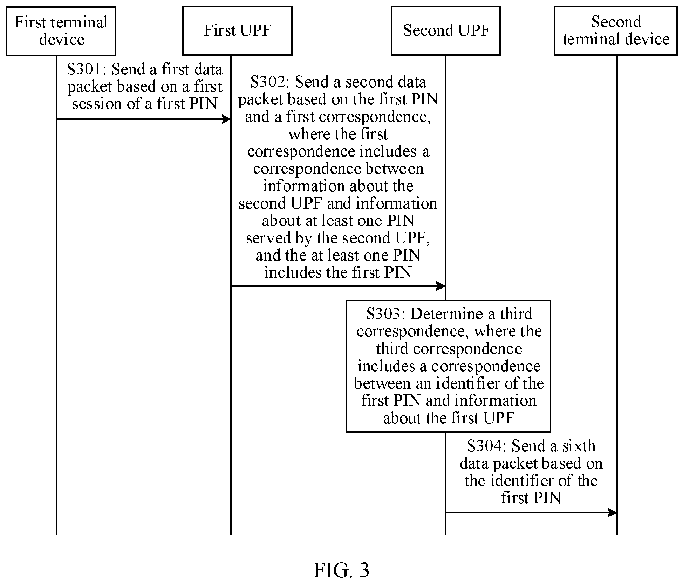

FIG. 3 is a schematic flowchart of a first communication method according to an embodiment of this application. In this embodiment, terminal devices in a same PIN may implement cross-region communication by using a first correspondence. As shown in FIG. 3, the method may include the following steps.

S301: A first terminal device sends a first data packet to a first UPF based on a first session.

Correspondingly, the first UPF receives the first data packet from the first terminal device based on the first session.

The first session may be a session of a first PIN. That the first session is the session of the first PIN may be understood as that the first session belongs to the session of the first PIN, or may be understood as that the first session may be used for communication between terminal devices in the first PIN. The first session may be, for example, a protocol data unit (protocol data unit, PDU). This is not limited.

Service data included in the first data packet may be video data, picture data, a document, a message, signaling, or the like. An implementation form of the service data is not limited in this embodiment of this application.

For example, the first terminal device may initiate a first session establishment procedure, and send the first data packet to the first user plane function network element based on the first session. In an implementation, the first session establishment procedure may include the following steps.

Step A1: The first terminal device may send a PDU session establishment request (PDU session establishment request) message to an AMF. Correspondingly, the AMF receives the PDU session establishment request message from the first terminal device.

The PDU session establishment request message is used to request to establish the first session. Optionally, the PDU session establishment request message may be carried in a UL NAS transport message. That is, the first terminal device may send the UL NAS transport message to the AMF, where the UL NAS transport message includes the PDU session establishment request message. This is not limited. The UL NAS transport message or the PDU session establishment request message may include a first data network name (data network name, DNN), an identifier (identity, ID) of the first PIN, or the DNN and the first PIN ID. The first data network name may be understood as a name of a first data network, and identifies the first data network. The first data network is related to the first PIN. For example, the first data network name may identify the first PIN.

Step A2: The AMF selects a first SMF.

After receiving the PDU session establishment request message, the AMF may select an SMF that serves the first session. In this embodiment, the AMF selects the first SMF to serve the first session. For example, the AMF may select the first SMF based on the first DNN, the AMF may select the first SMF based on the first PIN ID, or the AMF may select the first SMF based on the first DNN and the first PIN ID. An implementation process in which the AMF selects the first SMF is not limited in this embodiment of this application. The first SMF and the first UPF are located in a same region. Optionally, if the UL NAS transport message does not include the first PIN ID, the AMF may obtain the first PIN ID from a UDM. Optionally, if the UL NAS transport message does not include the first DNN, the AMF may obtain the first DNN from the UDM. An implementation process in which the AMF obtains the first PIN ID or the first DNN from the UDM is not limited in this embodiment of this application.

That the first SMF and the first UPF are located in the same region may be understood as that the first SMF supports serving the first UPF; may be understood as that a PIN served by the first SMF and a PIN served by the first UPF overlap or partially overlap; or may be understood as that a communication range of the first SMF and a communication range of the first UPF overlap or partially overlap. This is not limited.

The first SMF that serves the first session is selected by the AMF. In another implementation, the first SMF that serves the first session may alternatively be selected by an NRF. In other words, the NRF may select the first SMF, and send a second message to the AMF, where the second message indicates the first SMF (for example, the second message may include information about the first SMF). Correspondingly, the AMF receives the second message, and determines the first SMF based on the second message. For example, the AMF may send a third message to the NRF, where the third message includes the first PIN ID and/or the first DNN. The NRF receives the third message, selects the first SMF based on the third message, and sends the second message to the AMF. For example, the NRF determines (or queries), based on the first PIN ID and/or the first DNN, at least one SMF that supports serving the first session, and selects one SMF (namely, the first SMF) from the at least one SMF to serve the first session. Optionally, the third message may be used to request the SMF that serves the first session.

Optionally, when the first SMF is selected by the NRF, that is, the AMF queries the NRF for the first SMF, the NRF may further determine (or store, maintain, record, or establish) a fourth correspondence. The fourth correspondence includes a correspondence between the information about the first SMF and information about at least one DN supported by the first SMF, includes a correspondence between the information about the first SMF and information about at least one PIN served by the first SMF, or includes the correspondence between the information about the first SMF and the information about the at least one DN supported by the first SMF and the correspondence between the information about the first SMF and the information about the at least one PIN served by the first SMF. For example, the first SMF may send second information to the NRF, where the second information includes the information about the at least one DN supported by the first SMF and/or the information about the at least one PIN served by the first SMF. The NRF receives the second information, and determines the fourth correspondence based on the second information. In this embodiment of this application, the at least one DN supported by the first SMF includes the first DN. The at least one PIN served by the first SMF includes the first PIN.

The information about the first SMF identifies the first SMF. In an implementation, the information about the first SMF may include an identifier of the first SMF; the information about the first SMF may include domain name information of the first SMF; the information about the first SMF includes address information of the first SMF; the information about the first SMF may include the identifier of the first SMF and the domain name information of the first SMF; the information about the first SMF may include the identifier of the first SMF and the address information of the first SMF; the information about the first SMF may include the domain name information of the first SMF and the address information of the first SMF; or the information about the first SMF may include the identifier of the first SMF, the domain name information of the first SMF, and the address information of the first SMF. The domain name information of the first SMF may be a fully qualified domain name (fully qualified domain name, FQDN) of the first SMF. This is not limited. The address information of the first SMF may be an IP address of the first SMF. This is not limited.

The information about the at least one PIN served by the first SMF identifies the at least one PIN. In an implementation, the information about the at least one PIN served by the first SMF may include an identifier of the at least one PIN; the information about the at least one PIN served by the first SMF may include mask information (and/or a mask length value) of the at least one PIN; the information about the at least one PIN served by the first SMF may include a third identifier range; the information about the at least one PIN served by the first SMF may include the identifier of the at least one PIN and the mask information of the at least one PIN; the information about the at least one PIN served by the first SMF may include the identifier of the at least one PIN and the third identifier range; the information about the at least one PIN served by the first SMF may include the mask information of the at least one PIN and the third identifier range; or the information about the at least one PIN served by the first SMF may include the identifier of the at least one PIN, the mask information of the at least one PIN, and the third identifier range.

The identifier of the at least one PIN may be referred to as at least one PIN ID. This is not limited. The at least one PIN ID may be included in a PIN ID list (list), that is, the PIN ID list includes the at least one PIN ID. The PIN ID may be a character string, or may be an integer value. An implementation form of the PIN ID is not limited in this embodiment of this application.

The mask information of the at least one PIN may include a mask parameter, include information obtained by performing a mask operation on the identifier of the at least one PIN or domain name information of the at least one PIN based on the mask parameter, or include the mask parameter and the information obtained by performing a mask operation on the identifier of the at least one PIN or the domain name information of the at least one PIN based on the mask parameter. For example, the PIN ID is user1.beijing.PIN.com, the mask parameter may be 0.255.255.255, and the information obtained by performing a mask operation on the PIN ID based on the mask parameter may be 0.beijing.PIN.com.

The third identifier range may be understood as a range to which an ID of a PIN supported by the first SMF belongs. The identifier of the at least one PIN served by the first SMF belongs to the third identifier range. In this embodiment of this application, the third identifier range includes the identifier of the first PIN. The identifier of the first PIN belongs to the third identifier range. For example, the third identifier range is represented as 100 to 200, which means that the ID of the at least one PIN served by the first SMF belongs to 100 to 200.

The information about the at least one DN supported by the first SMF identifies the at least one DN. In an implementation, the information about the at least one DN supported by the first SMF may include an identifier of the at least one DN; the information about the at least one DN supported by the first SMF may include mask information of the at least one DN; the information about the at least one DN supported by the first SMF may include a second identifier range; the information about the at least one DN supported by the first SMF may include the identifier of the at least one DN and the mask information of the at least one DN; the information about the at least one DN supported by the first SMF may include the identifier of the at least one DN and the second identifier range; the information about the at least one DN supported by the first SMF may include the mask information of the at least one DN and the second identifier range; or the information about the at least one DN supported by the first SMF may include the identifier of the at least one DN, the mask information of the at least one DN, and the second identifier range.

The identifier of the at least one DN supported by the first SMF may be, for example, a name of the at least one DN, that is, at least one DNN. This is not limited. The at least one DNN may be included in a DNN list, that is, the DNN list includes the at least one DNN. An implementation form of the identifier of the DN is not limited in this embodiment of this application.

The mask information of the at least one DN supported by the first SMF may include a mask parameter, include information obtained by performing a mask operation on the identifier of the at least one DN, domain name information of the at least one DN, or the like based on the mask parameter, or include the mask parameter and the information obtained by performing a mask operation on the identifier of the at least one DN, the domain name information of the at least one DN, or the like based on the mask parameter. For the mask information of the DN, refer to the mask information of the PIN. Details are not described again.

A fourth identifier range may be understood as a range to which the identifier of the at least one DN supported by the first SMF belongs. The identifier of the at least one DN supported by the first SMF belongs to the second identifier range, that is, the second identifier range includes the identifier of the at least one DN.

For example, the mask parameter is a wildcard identifier (for example, "*"), a DNN supported by the first SMF and reported by the first SMF to the NRF is *.beijing.PIN.com., and the NRF may select the first SMF based on some information in the DNN. For example, when the first DNN is user1.beijing.PIN.com, the NRF may match some information (for example, beijing.PIN.com) in the first DDN with the DNN, which is *.beijing.PIN.com., reported by the first SMF, select the first SMF for the first DNN, and send the second message to the AMF.

For another example, the fourth identifier range supported by the first SMF and reported by the first SMF to the NRF is User1 to User100.beijing.PIN.com. When the first DNN is user15.beijing.PIN.com, the NRF may match some information (for example, beijing.PIN.com) in the first DDN with User1 to User100.beijing.PIN.com, where User15 belongs to User1 to User100, and the NRF may select the first SMF for the first DNN and send the second message to the AMF.

An implementation process in which the NRF selects the first SMF is not limited in this embodiment of this application.

Step A3: The AMF sends the PDU session establishment request message to the first SMF. Correspondingly, the first SMF receives the PDU session establishment request message from the SMF.

The PDU session establishment request message may be carried in a CreateSMContextRequest message. This is not limited. In other words, the AMF sends the CreateSMContextRequest message to the first SMF, where the CreateSMContextRequest message includes the PDU session establishment request message. Optionally, the CreateSMContextRequest message or the PDU session establishment request message may include the first DNN, the first PIN ID, or the first DNN and the first PIN ID. Optionally, if the CreateSMContextRequest message does not include the first PIN ID, the first SMF may obtain the first PIN ID from the UDM. Optionally, if the CreateSMContextRequest message does not include the first DNN, the first SMF may obtain the first DNN from the UDM. An implementation process in which the first SMF obtains the first PIN ID or the first DNN from the UDM is not limited in this embodiment of this application.

Step A4: The first SMF establishes a correspondence between the first PIN and the first session.

The first SMF may establish (or store, maintain, or record) the correspondence between the first PIN and the first session. The correspondence between the first PIN and the first session may alternatively be replaced with a correspondence between the first PIN ID and the first session, or may be replaced with a correspondence between the first PIN ID and an identifier of the first session. In other words, the first SMF may maintain a correspondence between a PIN and at least one session of the PIN.

Step A5: The first SMF selects the first UPF.

The first SMF may select a UPF that serves the first session. In this embodiment, the first SMF selects the first UPF to serve the first session. For example, the first SMF may select the first UPF based on the first DNN, the first SMF may select the first UPF based on the first PIN ID, or the first SMF may select the first UPF based on the first DNN and the first PIN ID. An implementation process in which the first SMF selects the first UPF is not limited in this embodiment of this application.

Step A6: The first SMF sends a first message to the first UPF. Correspondingly, the first UPF receives the first message from the first SMF.

The first message may be used to request to establish the first session of the first PIN. The first message includes the first PIN ID. Optionally, the first message may be a packet forwarding control protocol (packet forwarding control protocol, PFCP) session establishment request (PFCF session establishment request) message. This is not limited.

Step A7: The first UPF establishes the first session based on the first message.

The first UPF may establish the first session in response to the first message, for example, allocate an IP address to the first terminal device. An implementation process in which the first UPF establishes the first session is not limited in this embodiment of this application. In this embodiment of this application, the first UPF may associate the first PIN with the first session. In other words, the first UPF stores a correspondence between the first PIN (or the first PIN ID) and a GTP-U tunnel of a user plane of the first session. In other words, the first UPF may establish (or store, maintain, or record) a correspondence between the first PIN (or the first PIN ID) and the first session (or the identifier of the first session).

Step A8: The first SMF sends a PDU session establishment accept (PDU session establishment accept) message to the AMF. Correspondingly, the AMF receives the PDU session establishment accept message from the first SMF.

The PDU session establishment accept message indicates that the first session is established. Optionally, the PDU session establishment accept message may be carried in a CreateSMContextResponse message. This is not limited. For example, the first SMF may send the CreateSMContextResponse message to the AMF, where the CreateSMContextResponse message includes the PDU session establishment accept message.

Step A9: The AMF sends the PDU session establishment accept message to the first terminal device. Correspondingly, the first terminal device receives the PDU session establishment accept message from the AMF.

After receiving the PDU session establishment accept message, the AMF may send the PDU session establishment accept message to the first terminal device. Optionally, the PDU session establishment accept message may be carried in a DL NAS transport message. For example, the AMF may send the DL NAS transport message to the first terminal device, where the DL NAS transport message includes the PDU session establishment accept message.

At this point, the first session is established. Then, the first terminal device may transmit the service data through the user plane of the first session. It should be understood that the first session establishment procedure is not limited in this embodiment of this application.

In S301, that the first terminal device sends the first data packet to the first UPF may be that the first terminal device sends the first data packet to an access network device that provides an access service for the first terminal device; the access network device receives the first data packet from the first terminal device, and forwards the first data packet to the first UPF; and the first UPF receives the first data packet.

S302: The first UPF sends a second data packet to a second UPF based on the first PIN and the first correspondence.

Correspondingly, the second UPF receives the second data packet from the first UPF.

Service data included in the second data packet is the same as the service data included in the first data packet, or a payload part of the second data packet is the same as a payload part of the first data packet. A packet header of the second data packet includes the identifier of the first PIN. For example, the first UPF may encapsulate a packet header (for example, a GTP-U packet header) outside the first data packet to obtain the second data packet. The packet header carries the first PIN ID. This is not limited.

The first correspondence may include a correspondence between information about the second UPF and information about at least one PIN served by (or connected to) the second UPF, or the first correspondence is the correspondence between the information about the second UPF and the information about the at least one PIN served by (or connected to) the second UPF. The at least one PIN served by the second UPF includes the first PIN. The first correspondence may also be referred to as a static correspondence. A name of the first correspondence is not limited in this embodiment of this application.

The information about the second UPF identifies the second UPF. In an implementation, the information about the second UPF may include an identifier of the second UPF; the information about the second UPF may include domain name information of the second UPF; the information about the second UPF includes address information of the second UPF; the information about the second UPF may include the identifier of the second UPF and the domain name information of the second UPF; the information about the second UPF may include the identifier of the second UPF and the address information of the second UPF; the information about the second UPF may include the domain name information of the second UPF and the address information of the second UPF; or the information about the second UPF may include the identifier of the second UPF, the domain name information of the second UPF, and the address information of the second UPF. The domain name information of the second UPF may be an FQDN of the second UPF. This is not limited. The address information of the second UPF may be an IP address of the second UPF. This is not limited.

The information about the at least one PIN served by the second UPF identifies the at least one PIN. In an implementation, the information about the at least one PIN served by the second UPF may include an identifier of the at least one PIN; the information about the at least one PIN served by the second UPF may include mask information (and/or a mask length value) of the at least one PIN; the information about the at least one PIN served by the second UPF may include a first identifier range; the information about the at least one PIN served by the second UPF may include the identifier of the at least one PIN and the mask information of the at least one PIN; the information about the at least one PIN served by the second UPF may include the identifier of the at least one PIN and the first identifier range; the information about the at least one PIN served by the second UPF may include the mask information of the at least one PIN and the first identifier range; or the information about the at least one PIN served by the second UPF may include the identifier of the at least one PIN, the mask information of the at least one PIN, and the first identifier range. The first identifier range may be understood as a range to which an ID of a PIN supported by the second UPF belongs. The identifier of the at least one PIN served by the second UPF is included in the first identifier range. In other words, the first identifier range includes the identifier of the first PIN. For the identifier of the at least one PIN, the mask information of the at least one PIN, and the first identifier range, refer to related descriptions in S301. Details are not described again.

In a possible implementation, the first UPF may establish (or store, maintain, or record) the first correspondence. For example, the first UPF may establish the first correspondence before S302, which is not shown in FIG. 3. For example, the first UPF may establish (or store, maintain, or record) a correspondence (or a static correspondence) between information about a UPF that establishes a connection to the first UPF (and/or that has established a connection to the first UPF) and information about at least one PIN served by the UPF, as shown in Table 1. The correspondence between the information about the UPF that establishes a connection to the first UPF (and/or that has established a connection to the first UPF) and the information about the at least one PIN served by the UPF includes the first correspondence. The UPF that establishes a connection to the first UPF (and/or that has established a connection to the first UPF) may include an L-UPF, may include a PIN-UPF, or may include the L-UPF and the PIN-UPF. This is not limited. In this embodiment of this application, the UPF that establishes a connection to the first UPF (and/or that has established a connection to the first UPF) includes the second UPF. One or more UPFs may establish a connection to the first UPF (and/or that have established a connection to the first UPF). This is not limited. In Table 1, a UPF 1, a UPF 2, and a UPF 3 are used as examples for illustration. Optionally, there are a plurality of UPFs that establish a connection to the first UPF (and/or that have established a connection to the first UPF). Correspondingly, the first UPF may establish a plurality of static relationships, and the plurality of static relationships may form a static correspondence group. For the information about the UPF, refer to the information about the second UPF. For the information about the at least one PIN served by the UPF, refer to the information about the at least one PIN served by the second UPF. Details are not described again.

**Table 1**

| Information about a UPF | Information about at least one PIN served by the UPF |
|---|---|
| Information about a UPF 1 | Information about a PIN 1 and information about a PIN 2 |
| Information about a UPF 2 | Information about the PIN 2 |
| Information about a UPF 3 | Information about the PIN 1 and information about a PIN 3 |

In S302, the first UPF sends the second data packet to the second UPF based on the first PIN and the first correspondence. In an implementation, the first UPF determines, based on the first PIN (or the first PIN ID, or information about the first PIN) and the first correspondence, that a target UPF of the first data packet is the second UPF, and sends the second data packet to the second UPF based on endpoint information of the second UPF. For example, the first UPF determines, based on the first PIN and the first correspondence, that the target UPF of the first data packet is the second UPF, obtains the endpoint information of the second UPF, and sends the second data packet to the second UPF based on the endpoint information of the second UPF. For example, the first UPF may obtain the endpoint information of the second UPF in response to a tunnel established between the first UPF and the second UPF for the first PIN, to establish a first tunnel for transmitting the at least one PIN; or after the first tunnel is established, the first UPF may obtain the endpoint information of the second UPF in response to the received first data packet of the first PIN, to forward, to the second UPF through the first tunnel, the service data included in the first data packet. A condition for triggering the first UPF to obtain the endpoint information of the second UPF is not limited in this embodiment of this application.

For example, the first correspondence is between the information about the second UPF and the identifier of the at least one PIN served by the second UPF. A PIN-UPF 1 determines that the identifier of the at least one PIN includes the identifier of the first PIN, and determines that the target UPF of the first data packet is a PIN-UPF 2. For another example, the first correspondence is between the information about the second UPF and the mask information of the at least one PIN served by the second UPF, and the mask information includes the information obtained by performing a mask operation on the identifier of the at least one PIN based on the mask parameter. If information obtained by performing a mask operation on the identifier of the first PIN matches the mask information in the first correspondence, a PIN-UPF 1 determines that the target UPF of the first data packet is a PIN-UPF 2. For still another example, the first correspondence is between the information about the second UPF and the first identifier range. A PIN-UPF 1 determines that the identifier of the first PIN belongs to the first identifier range, and determines that the target UPF of the first data packet is a PIN-UPF 2.

The endpoint information of the second UPF may include a TEID and an IP address. This is not limited. The endpoint information of the second UPF may be understood as endpoint information of the first tunnel on a second UPF side. The first tunnel may be used to transmit service data of the at least one PIN. For descriptions of the first tunnel, refer to the foregoing content. Details are not described again. For example, the first UPF sends the second data packet to the second UPF through the first tunnel. Correspondingly, the second UPF receives the second data packet from the first UPF through the first tunnel. The at least one PIN includes the first PIN. In other words, the endpoint information of the second UPF may be used to transmit the service data of the at least one PIN.

The second UPF and the first UPF may be located in different regions, that is, both the second UPF and the first UPF are PIN-UPFs. In this case, the endpoint information of the second UPF may be used to transmit service data of one or more PINs. This means that the first UPF may implement cross-region communication between a plurality of PINs with the second UPF through one tunnel. In comparison with that different tunnels need to be established for different PINs during cross-region communication, a quantity of tunnels established between UPFs during cross-region communication can be reduced, facilitating tunnel management. Because a tunnel establishment process consumes network resources, in the foregoing implementation, a quantity of tunnels established between the first UPF and the second UPF can be reduced. Therefore, network resource consumption can be further reduced, and network resource utilization can be improved.

Alternatively, the second UPF and the first UPF may be located in a same region. That is, the first UPF is a PIN-UPF, and the second UPF is an L-UPF. In this case, the endpoint information of the second UPF may be used to transmit service data of one PIN (that is, the first PIN).

Optionally, the first UPF may further establish (or store, maintain, or record) a correspondence (or a static correspondence) between information about the first UPF and information about at least one PIN served by the first UPF. This is not limited. For example, the first correspondence may further include the correspondence between the information about the first UPF and the information about the at least one PIN served by the first UPF. In this way, intra-region communication can be implemented between different terminal devices in a same PIN.

The information about the first UPF may include an identifier of the first UPF; the information about the first UPF may include domain name information of the first UPF; the information about the first UPF includes address information of the first UPF; the information about the first UPF may include the identifier of the first UPF and the domain name information of the first UPF; the information about the first UPF may include the identifier of the first UPF and the address information of the first UPF; the information about the first UPF may include the domain name information of the first UPF and the address information of the first UPF; or the information about the first UPF may include the identifier of the first UPF, the domain name information of the first UPF, and the address information of the first UPF. For the domain name information of the first UPF, refer to the domain name information of the second UPF. For the address information of the first UPF, refer to the address information of the second UPF. Details are not described again.

In a possible implementation, the first UPF receives the first data packet from the first terminal device based on the first session, and sends an eighth data packet to a second terminal device based on the first PIN and the first correspondence, where the first correspondence includes the correspondence between the information about the first UPF and the information about the at least one PIN served by the first UPF, and the at least one PIN served by the first UPF includes the first PIN. For example, the first UPF determines, based on the first PIN and the first correspondence, that the target UPF of the first data packet is the first UPF (in other words, determines that cross-region communication is not needed), and sends the eighth data packet to the second terminal device based on a third session of the first PIN. For example, the first UPF may determine the third session based on the first PIN, a destination address of the first data packet (that is, an address of the second terminal device), and/or the like. Service data included in the eighth data packet is the same as the service data included in the first data packet, or a payload part of the eighth data packet is the same as the payload part of the first data packet. For a third session establishment procedure, refer to the first session establishment procedure. Details are not described again. It should be noted that cross-region communication is used as an example for description in FIG. 3.

S303: The second UPF determines a third correspondence.

After receiving the second data packet, the second UPF may determine (or store, record, maintain, or establish) the third correspondence. The third correspondence may also be referred to as a dynamic correspondence. A name of the third correspondence is not limited in this embodiment of this application. The third correspondence may include a correspondence between the identifier of the first PIN (or the first PIN, or the information about the first PIN) and the information about the first UPF, or the third correspondence is the correspondence between the identifier of the first PIN (or the first PIN, or the information about the first PIN) and the information about the first UPF. For example, the second UPF parses the second data packet to obtain the identifier of the first PIN, and establishes the third correspondence based on the identifier of the first PIN. For example, the second UPF may obtain the identifier of the first PIN by parsing the packet header (for example, the GTP-U packet header) of the second data packet.

For example, the second UPF may determine (or store, record, maintain, or establish) a correspondence between a source UPF and an identifier, of a PIN, carried in at least one data packet received by the second UPF. The at least one data packet includes the second data packet. In other words, the correspondence between the source UPF and the identifier, of the PIN, carried in the at least one data packet received by the second UPF includes the third correspondence. It may be understood that the correspondence between the source UPF and the identifier, of the PIN, carried in the at least one data packet received by the second UPF may be one or more dynamic correspondences. Optionally, a plurality of dynamic correspondences may form a dynamic correspondence group.

It should be noted that the static correspondence and the dynamic correspondence in this embodiment of this application are a pair of relative concepts. The static correspondence (for example, the first correspondence) is stored in advance. For example, the static correspondence is stored when a connection is established between UPFs (for example, a connection is established for the first time), and is updated (or modified) less frequently. The dynamic correspondence (for example, the third correspondence) is dynamically maintained in response to a received data packet (for example, a data packet received for the first time), and is updated (or modified) more frequently.

S304: The second UPF sends a sixth data packet to the second terminal device based on the identifier of the first PIN.

Correspondingly, the second terminal device receives the sixth data packet from the second UPF.

Service data included in the sixth data packet is the same as the service data included in the second data packet, or a payload part of the sixth data packet is the same as the payload part of the second data packet. In other words, the service data included in the sixth data packet is the same as the service data included in the first data packet, or the payload part included in the sixth data packet is the same as the payload part included in the first data packet.

For example, the second UPF determines a second session of the first PIN based on the identifier of the first PIN, a destination address of the second data packet (that is, the address of the second terminal device), and/or the like, and sends the sixth data packet to the second terminal device based on the second session. For example, the second UPF parses the packet header of the second data packet to obtain the identifier of the first PIN, determines the second session based on the identifier of the first PIN, deletes the packet header of the second data packet to obtain the sixth data packet, and sends the sixth data packet to the second terminal device based on the second session. For example, the second UPF stores a correspondence between the identifier of the first PIN and at least one session of the first PIN, and the at least one session includes the second session. The second UPF determines the second session based on the identifier of the first PIN and the correspondence between the identifier of the first PIN and the at least one session of the first PIN, and sends the sixth data packet to the second terminal device based on the second session. For another example, the second UPF parses the second data packet to obtain the destination address of the second data packet, determines the second session based on the destination address of the second data packet, deletes the packet header of the second data packet to obtain the sixth data packet, and sends the sixth data packet to the second terminal device based on the second session. For establishment of the second session, refer to establishment of the first session. Details are not described again.

At this point, the service data included in the first data packet is successfully transmitted to the second terminal device.

Optionally, the first communication method may further include: The second terminal device sends a seventh data packet to the second UPF, where the seventh data packet includes the identifier of the first PIN. The second UPF may receive the seventh data packet from the second terminal device, and send a third data packet to the first UPF based on the identifier of the first PIN and the third correspondence, where a packet header of the third data packet includes the identifier of the first PIN. The first UPF receives the third data packet based on the identifier of the first PIN and/or a destination address of the third data packet (that is, an address of the first terminal device), and sends a fourth data packet to the first terminal device. The first terminal device receives the fourth data packet from the first UPF based on the first session. For example, the second terminal device may send the seventh data packet to the second UPF based on the second session. Correspondingly, the second UPF receives the seventh data packet from the second terminal device based on the second session.

For example, that the second UPF sends the third data packet to the first UPF based on the identifier of the first PIN and the third correspondence may be that the second UPF determines, based on the identifier of the first PIN and the third correspondence, that a target UPF of the seventh data packet is the first UPF, and sends the third data packet to the first UPF based on endpoint information of the first UPF. The endpoint information of the first UPF may be used to transmit the service data of the at least one PIN. For the endpoint information of the first UPF, refer to the endpoint information of the second UPF. Details are not described again. For example, the second UPF may determine the endpoint information of the first UPF, and send the third data packet to the first UPF based on the endpoint information of the first UPF. For a manner of determining the endpoint information of the first UPF, refer to a manner of determining the endpoint information of the second UPF. Details are not described again.

For example, that the first UPF sends the fourth data packet to the first terminal device based on the identifier of the first PIN and/or the destination address of the third data packet may be that the first UPF sends the fourth data packet to the first terminal device based on the identifier of the first PIN and/or the destination address of the third data packet and the first session. For example, the first UPF determines the first session based on the identifier of the first PIN and/or the destination address of the third data packet. For example, the first UPF stores a correspondence between the identifier of the first PIN and at least one session, and the at least one session includes the first session. The first UPF determines the first session based on the identifier of the first PIN and the correspondence between the identifier of the first PIN and the at least one session, and sends the fourth data packet to the first terminal device based on the first session. For another example, the first UPF parses the fourth data packet to obtain a destination address of the fourth data packet (that is, the address of the first terminal device), determines the first session based on the destination address of the third data packet, and sends the fourth data packet to the first terminal device based on the first session.

Service data included in the third data packet is the same as service data included in the seventh data packet, or a payload part of the third data packet is the same as a payload part of the seventh data packet. Service data included in the fourth data packet is the same as the service data included in the third data packet, or a payload part of the fourth data packet is the same as the payload part of the third data packet. In other words, the service data included in the fourth data packet is the same as the service data included in the seventh data packet, or the payload part of the fourth data packet is the same as the payload part of the seventh data packet.

Optionally, the first communication method may further include: The first UPF may send a fifth data packet to the second UPF, where a packet header of the fifth data packet includes first information and the identifier of the first PIN. The second UPF receives the fifth data packet from the first UPF, and deletes (or releases) the third correspondence based on the first information. The first information may indicate that the first session of the first PIN has been released. The first information may be, for example, an end marker (end marker). This is not limited. For example, the first UPF determines that the first session has been released, and may send the fifth data packet to the second UPF. For example, the first UPF may send the fifth data packet to the second UPF through the first tunnel. In this implementation, the second UPF may delete the third correspondence, and release, in a timely manner, a storage resource occupied by the third correspondence, thereby reducing a waste of storage resources.

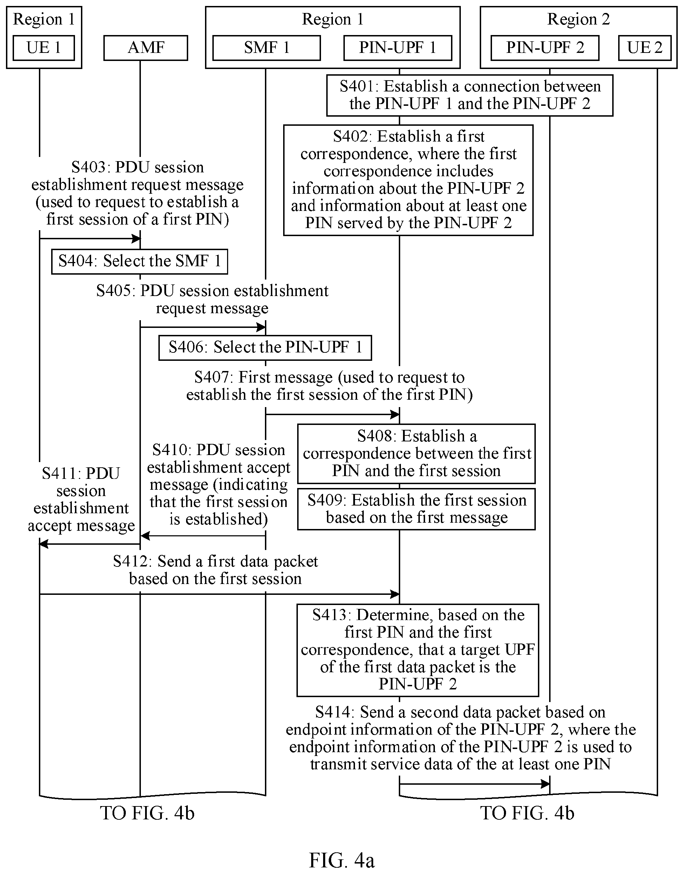

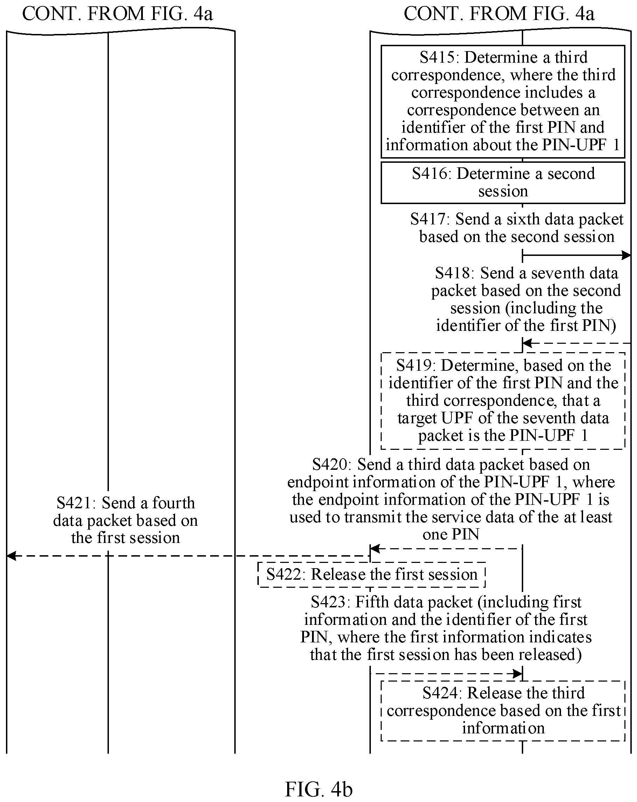

The following describes the first communication method in detail with reference to FIG. 4a and FIG. 4b. As shown in FIG. 4a and FIG. 4b, the first communication method may include the following content. A first terminal device is located in a region 1, and is denoted as a UE 1. A second terminal device is located in a region 2, and is denoted as a UE 2. The UE 1 and the UE 2 are different UEs in a first PIN. A first UPF is located in the region 1, and is denoted as a PIN-UPF 1. A second UPF is located in the region 2, and is denoted as a PIN-UPF 2. A first SMF is located in the region 1, and is denoted as an SMF 1. The region 1 and the region 2 are different regions.

S401: Establish a connection between the PIN-UPF 1 and the PIN-UPF 2.

For example, a first tunnel is established between the PIN-UPF 1 and the PIN-UPF 2. For example, the PIN-UPF 1 obtains endpoint information of the PIN-UPF 2, where the endpoint information of the PIN-UPF 2 may be used to transmit service data of at least one PIN. For example, the PIN-UPF 2 may obtain endpoint information of the PIN-UPF 1, where the endpoint information of the PIN-UPF 1 may be used to transmit service data of at least one PIN. The at least one PIN includes the first PIN. An implementation process of establishing a connection between the PIN-UPF 1 and the PIN-UPF 2 is not limited in this embodiment of this application.

S402: The PIN-UPF 1 establishes a first correspondence.

The first correspondence includes information about the PIN-UPF 2 and information about at least one PIN served by the PIN-UPF 2. For an implementation process of S402, refer to the descriptions in S302. Details are not described again.

S403: The UE 1 sends a PDU session establishment request message to an AMF. Correspondingly, the AMF receives the PDU session establishment request message from the UE 1.

The PDU session establishment request message is used to request to establish a first session, for example, request to establish the first session of the first PIN. Optionally, the PDU session establishment request message may be carried in a UL NAS transport message. This is not limited. The UL NAS transport message or the PDU session establishment request message may include a first DNN and/or a first PIN ID.

S404: The AMF selects the SMF 1.

The AMF selects the SMF 1 to serve the first session. For an implementation process of S404, refer to the descriptions in S301. Details are not described again.

S405: The AMF sends the PDU session establishment request message to the SMF 1. Correspondingly, the SMF 1 receives the PDU session establishment request message from the AMF.

The PDU session establishment request message may be carried in a CreateSMContextRequest message. This is not limited. In other words, the AMF sends the CreateSMContextRequest message to the SMF 1, where the CreateSMContextRequest message includes the PDU session establishment request message. For an implementation process of S405, refer to the descriptions in S301. Details are not described again.

S406: The SMF 1 selects the PIN-UPF 1.

The SMF 1 selects the PIN-UPF 1 to serve the first session. For an implementation process of S406, refer to the foregoing descriptions. Details are not described again.

S407: The SMF 1 sends a first message to the PIN-UPF 1. Correspondingly, the PIN-UPF 1 receives the first message from the SMF 1.

The first message may be used to request to establish the first session of the first PIN. The first message includes the first PIN ID. Optionally, the first message may be a PFCP session establishment request message. This is not limited.

S408: The PIN-UPF 1 establishes a correspondence between the first PIN and the first session.

For an implementation process of S408, refer to the descriptions in S301. Details are not described again.

S409: The PIN-UPF 1 establishes the first session based on the first message.

The PIN-UPF 1 may establish the first session in response to the first message. In this embodiment of this application, the PIN-UPF 1 may associate the first PIN with the first session. In other words, the PIN-UPF 1 stores a correspondence between the first PIN (or the first PIN ID) and a GTP-U tunnel of a user plane of the first session. In other words, the PIN-UPF 1 may establish (or store, maintain, or record) a correspondence between the first PIN (or the first PIN ID) and the first session (or an identifier of the first session).

S410: The SMF 1 sends a PDU session establishment accept message to the AMF. Correspondingly, the AMF receives the PDU session establishment accept message from the SMF 1.

The PDU session establishment accept message indicates that the first session is established. Optionally, the PDU session establishment accept message may be carried in a CreateSMContextResponse message. This is not limited.

Optionally, the PIN-UPF 1 may send a response message of the first message to the SMF 1, where the response message of the first message may indicate that the first session is established. For example, the PIN-UPF 1 may send the response message of the first message to the SMF 1 before S410, which is not shown in FIG. 4a and FIG. 4b. Correspondingly, the SMF 1 receives the response message of the first message from the PIN-UPF 1, and sends the PDU session establishment accept message to the AMF based on the response message of the first message. A condition for triggering the SMF 1 to send the PDU session establishment accept message to the AMF is not limited in this embodiment of this application.

S411: The AMF sends the PDU session establishment accept message to the UE 1. Correspondingly, the UE 1 receives the PDU session establishment accept message from the AMF.

Optionally, the PDU session establishment accept message may be carried in a DL NAS transport message. This is not limited.

At this point, the first session is established.

S412: The UE 1 sends a first data packet to the PIN-UPF 1 based on the first session. Correspondingly, the PIN-UPF 1 receives the first data packet from the UE 1 based on the first session.

For an implementation process of S412, refer to the descriptions in S301. Details are not described again.

S413: The PIN-UPF 1 determines, based on the first PIN and the first correspondence, that a target UPF of the first data packet is the PIN-UPF 2.

S414: The PIN-UPF 1 sends a second data packet to the PIN-UPF 2 based on the endpoint information of the PIN-UPF 2. Correspondingly, the PIN-UPF 2 receives the second data packet from the PIN-UPF 1.

Alternatively, S414 may be expressed as that the PIN-UPF 1 sends the second data packet to the PIN-UPF 2 through the first tunnel. Correspondingly, the PIN-UPF 2 receives the second data packet from the PIN-UPF 1 through the first tunnel.

For example, the PIN-UPF 1 may obtain the endpoint information of the PIN-UPF 2 based on the first PIN, where the endpoint information of the PIN-UPF 2 is used to transmit the service data of the at least one PIN. Service data included in the second data packet is the same as service data included in the first data packet.

For implementation processes of S413 and S414, refer to the descriptions in S302. Details are not described again.

S415: The PIN-UPF 2 determines a third correspondence.

The third correspondence includes a correspondence between the identifier of the first PIN and the PIN-UPF 1. For an implementation process of S415, refer to the descriptions in S303. Details are not described again.

S416: The PIN-UPF 2 determines a second session.

The second session is a session of the first PIN. For example, the PIN-UPF 2 may determine the second session based on the identifier of the first PIN and/or a destination address of the second data packet. For a specific implementation process of S416, refer to the descriptions in S304. Details are not described again.

S417: The PIN-UPF 2 sends a sixth data packet to the UE 2 based on the second session. Correspondingly, the UE 2 receives the sixth data packet from the PIN-UPF 2 based on the second session.

Alternatively, S417 may be expressed as that the PIN-UPF 2 sends the sixth data packet to the UE 2 based on the first PIN (or the identifier of the first PIN).

Service data included in the sixth data packet is the same as the service data included in the second data packet.

S418: The UE 2 sends a seventh data packet to the PIN-UPF 2 based on the second session. Correspondingly, the PIN-UPF receives the seventh data packet from the UE 2 based on the second session.

Alternatively, S418 may be expressed as that the UE 2 sends the seventh data packet to the PIN-UPF 2 based on the first PIN (or the identifier of the first PIN).

The seventh data packet includes the identifier of the first PIN.

S419: The PIN-UPF 2 determines, based on the identifier of the first PIN and the third correspondence, that a target UPF of the seventh data packet is the PIN-UPF 1.

S420: The PIN-UPF 2 sends a third data packet to the PIN-UPF 1 based on the endpoint information of the PIN-UPF 1. Correspondingly, the PIN-UPF 1 receives the third data packet from the PIN-UPF 2.

Alternatively, S420 may be expressed as that the PIN-UPF 2 sends the third data packet to the PIN-UPF 1 through the first tunnel. Correspondingly, the PIN-UPF 1 receives the third data packet from the PIN-UPF 2 through the first tunnel.

For example, the PIN-UPF 2 may obtain the endpoint information of the PIN-UPF 1 based on the first PIN, where the endpoint information of the PIN-UPF 1 is used to transmit the service data of the at least one PIN; and the PIN-UPF 2 send the third data packet to the PIN-UPF 1 based on the endpoint information of the PIN-UPF 1, where a packet header of the third data packet includes the identifier of the first PIN, and service data included in the third data packet is the same as service data included in the seventh data packet.

For implementation processes of S419 and S420, refer to the foregoing related descriptions. Details are not described again.

S421: The PIN-UPF 1 sends a fourth data packet to the UE 1 based on the first session. Correspondingly, the UE 1 receives the fourth data packet from the PIN-UPF 1 based on the first session.

Alternatively, S421 may be expressed as that the PIN-UPF 1 sends the fourth data packet to the UE 1 based on the first PIN (or the identifier of the first PIN).

For example, the PIN-UPF 1 may determine the first session based on the first PIN (or the identifier of the first PIN), and send the fourth data packet to the UE 1 based on the first session, where service data included in the fourth data packet is the same as the service data included in the third data packet. For an implementation process of S420, refer to the foregoing related descriptions. Details are not described again.

S422: The PIN-UPF 1 releases the first session.

The PIN-UPF 1 may release or delete the first session. A release process and a release reason of the first session are not limited in this embodiment of this application.

S423: The PIN-UPF 1 sends a fifth data packet to the PIN-UPF 2. Correspondingly, the PIN-UPF 2 receives the fifth data packet from the PIN-UPF 1.

The fifth data packet includes first information and the identifier of the first PIN. The first information indicates that the first session has been released. For example, the PIN-UPF 1 sends the fifth data packet to the PIN-UPF 2 through the first tunnel (or by using the endpoint information of the PIN-UPF 2).

S424: The PIN-UPF 2 releases the third correspondence based on the first information.

For example, the PIN-UPF 2 determines, based on the first information, that the first session of the first PIN has been released, and releases the third correspondence.

S418 to S424 are optional steps, and are represented by dashed lines in FIG. 4a and FIG. 4b.

It may be understood that an execution sequence of the steps in FIG. 4a and FIG. 4b is merely an example, and this embodiment of this application is not limited thereto. For example, the PIN-UPF 1 may first establish the correspondence between the first PIN and the first session and then establish the first session; may establish the first session and then establish the correspondence between the first PIN and the first session; or may establish the first session while establishing the correspondence between the first PIN and the first session.

In the first communication method, the first correspondence includes the correspondence between the information about the second UPF and the information about the at least one PIN served by the second UPF. In this way, based on a PIN to which a session belongs and the first correspondence, whether a target UPF of service data received based on the session is the second UPF can be determined. In this embodiment of this application, the first PIN to which the first session belongs is included in the at least one PIN. This means that even if the first terminal device and the second terminal device (a target terminal device of the first data packet) that are in the first PIN are located in different regions, the first UPF may send, based on the first PIN and the first correspondence, the service data of the first data packet to the second UPF that serves the second terminal device, so that the service data of the first data packet is transmitted to the second terminal device via the second UPF, thereby implementing cross-region communication between different terminal devices in a same PIN.

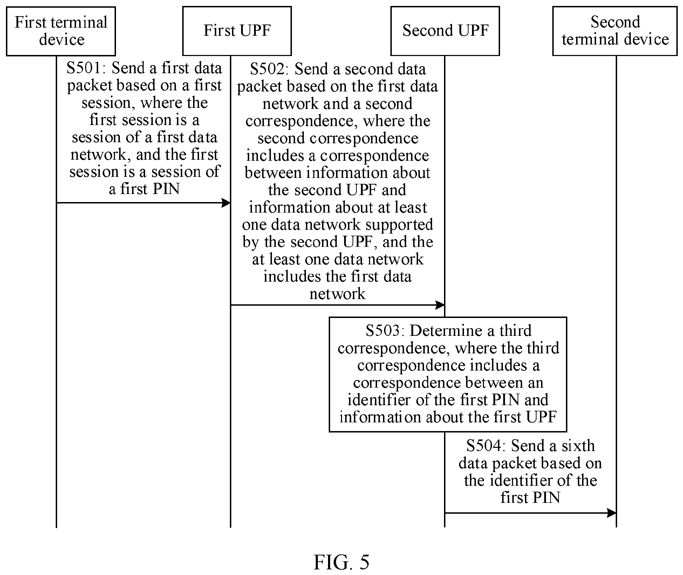

FIG. 5 is a schematic flowchart of a second communication method according to an embodiment of this application. In this embodiment, terminal devices in a same PIN may implement cross-region communication by using a second correspondence. As shown in FIG. 5, the method may include the following steps.

S501, S503, and S504 in FIG. 5 are respectively the same as S301, S303, and S304 in FIG. 3. A difference is as follows.

S502: A first user plane function network element sends a second data packet to a second user plane function network element based on a first data network and the second correspondence.

Correspondingly, the second user plane function network element receives the second data packet from the first user plane function network element.

For descriptions of the second data packet, refer to content in S302. Details are not described again. In this embodiment, a first session may be a session of the first data network (data network, DN), or the first session may belong to the session of the first data network. In addition, the first session is a session of a first PIN. For details, refer to the descriptions in S301. Details are not described again. The first data network is related to the first PIN. For example, the first data network corresponds to the first PIN.

The second correspondence may include a correspondence between information about the second UPF and at least one data network supported by (or connected to) the second UPF, or the second correspondence may be a correspondence between the information about the second UPF and information about the at least one data network supported by (or connected to) the second UPF. The at least one data network supported by the second UPF includes the first data network. The second correspondence may also be referred to as a static correspondence. A name of the second correspondence is not limited in this embodiment of this application. For the information about the second UPF, refer to the descriptions in S302. Details are not described again.

The information about the at least one data network supported by the second UPF identifies the at least one data network. In an implementation, the information about the at least one data network supported by the second UPF may include an identifier of the at least one data network; the information about the at least one data network supported by the second UPF may include mask information of the at least one data network; the information about the at least one data network supported by the second UPF may include a second identifier range; the information about the at least one data network supported by the second UPF may include the identifier of the at least one data network and the mask information of the at least one data network; the information about the at least one data network supported by the second UPF may include the identifier of the at least one data network and the second identifier range; the information about the at least one data network supported by the second UPF may include the mask information of the at least one data network and the second identifier range; or the information about the at least one data network supported by the second UPF may include the identifier of the at least one data network, the mask information of the at least one data network, and the second identifier range. The second identifier range may be understood as a range to which the identifier of the at least one data network supported by the second UPF belongs. The identifier of the at least one data network supported by the second UPF belongs to the second identifier range, that is, the second identifier range includes the identifier of the at least one data network. In this embodiment of this application, the second identifier range includes an identifier of a second data network. For the identifier of the at least one data network and the mask information of the at least one data network, refer to the foregoing content. Details are not described again.

In a possible implementation, the first UPF may establish (or store, maintain, or record) the second correspondence, which is not shown in FIG. 5. For example, the first UPF may establish (or store, maintain, or record) a correspondence (or a static correspondence) between information about a UPF that establishes a connection to the first UPF (and/or that has established a connection to the first UPF) and information about at least one data network supported by the UPF, as shown in Table 2. The correspondence between the information about the UPF that establishes a connection to the first UPF (and/or that has established a connection to the first UPF) and the information about the at least one data network supported by the UPF includes the second correspondence. The UPF that establishes a connection to the first UPF (and/or that has established a connection to the first UPF) may include an L-UPF, may include a PIN-UPF, or may include the L-UPF and the PIN-UPF. This is not limited. In this embodiment of this application, the UPF that establishes a connection to the first UPF (and/or that has established a connection to the first UPF) includes the second UPF. One or more UPFs may establish a connection to the first UPF (and/or that have established a connection to the first UPF). This is not limited. In Table 2, a UPF 1, a UPF 2, and a UPF 3 are used as examples for illustration. Optionally, there are a plurality of UPFs that establish a connection to the first UPF (and/or that have established a connection to the first UPF). Correspondingly, the first UPF may establish a plurality of static relationships, and the plurality of static relationships may form a static correspondence group. For the information about the UPF, refer to the information about the second UPF. For the information about the at least one data network supported by the UPF, refer to the information about the at least one data network supported by the second UPF. Details are not described again.

**Table 2**

| Information about a UPF | Information about at least one DN supported by the UPF |
|---|---|
| Information about a UPF 1 | Information about a DN 1 and information about a DN 2 |
| Information about a UPF 2 | Information about the DN 2 |
| Information about a UPF 3 | Information about the DN 1 and information about a DN 3 |

In S502, the first UPF sends the second data packet to the second UPF based on the first data network and the second correspondence. In an implementation, the first UPF determines, based on the first data network (or a first data network name, or information about the first data network) and the second correspondence, that a target UPF of a first data packet is the second UPF, and sends the second data packet to the second UPF based on endpoint information of the second UPF. For example, the first UPF determines, based on the first data network and the second correspondence, that the target UPF of the first data packet is the second UPF, obtains the endpoint information of the second UPF, and sends the second data packet to the second UPF based on the endpoint information of the second UPF. For example, the first UPF may obtain the endpoint information of the second UPF in response to a tunnel established between the first UPF and the second UPF for the first PIN, to establish a first tunnel for transmitting at least one PIN; or after the first tunnel is established, the first UPF may obtain the endpoint information of the second UPF in response to the received first data packet of the first PIN, to forward, to the second UPF through the first tunnel, service data included in the first data packet. A condition for triggering the first UPF to obtain the endpoint information of the second UPF is not limited in this embodiment of this application. For the endpoint information of the second UPF, refer to the descriptions in S302. Details are not described again.

For example, the second correspondence is between the information about the second UPF and the identifier of the at least one data network supported by the second UPF. A PIN-UPF 1 determines that the identifier of the at least one data network includes an identifier of the first data network, and determines that the target UPF of the first data packet is a PIN-UPF 2. For another example, the second correspondence is between the information about the second UPF and the mask information of the at least one data network supported by the second UPF, and the mask information includes information obtained by performing a mask operation on the identifier (for example, a data network name) of the at least one data network based on a mask parameter. If information obtained by performing a mask operation on the first data network name matches the mask information in the second correspondence, a PIN-UPF 1 determines that the target UPF of the first data packet is a PIN-UPF 2. For still another example, the second correspondence is between the information about the second UPF and the second identifier range. A PIN-UPF 1 determines that the identifier of the first data network belongs to the second identifier range, and determines that the target UPF of the first data packet is a PIN-UPF 2.

The second UPF and the first UPF may be located in different regions, that is, both the second UPF and the first UPF are PIN-UPFs. Alternatively, the second UPF and the first UPF may be located in a same region. That is, the first UPF is a PIN-UPF, and the second UPF is an L-UPF. For an implementation process thereof, refer to the related descriptions in S302. Details are not described again.

Optionally, the first UPF may further establish (or store, maintain, or record) a correspondence (or a static correspondence) between information about the first UPF and information about at least one data network supported by the first UPF. This is not limited. For example, the second correspondence may further include the correspondence between the information about the first UPF and the information about the at least one data network supported by the first UPF. In this way, intra-region communication can be implemented between different terminal devices in a same PIN.

In a possible implementation, the first UPF receives the first data packet from a first terminal device based on the first session, where the first session is the session of the first data network; and sends an eighth data packet to a second terminal device based on the first data network and the second correspondence, where the second correspondence includes the correspondence between the information about the first UPF and the information about the at least one data network supported by the first UPF, and the at least one data network supported by the first UPF includes the first data network. For example, the first UPF determines, based on the first data network and a first correspondence, that the target UPF of the first data packet is the first UPF (in other words, determines that cross-region communication is not needed), and sends the eighth data packet to the second terminal device based on a third session of the first PIN. For example, the first UPF may determine the third session based on the first PIN, a destination address of the first data packet (that is, an address of the second terminal device), and/or the like. Service data included in the eighth data packet is the same as the service data included in the first data packet, or a payload part of the eighth data packet is the same as a payload part of the first data packet. It should be noted that cross-region communication is used as an example for description in FIG. 3. It should be noted that cross-region communication is used as an example for description in FIG. 5.

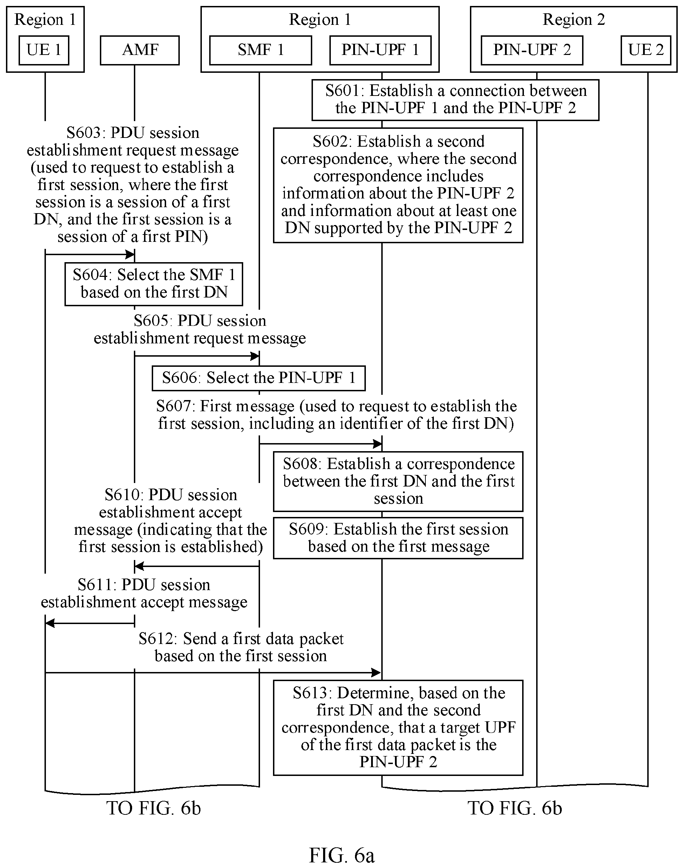

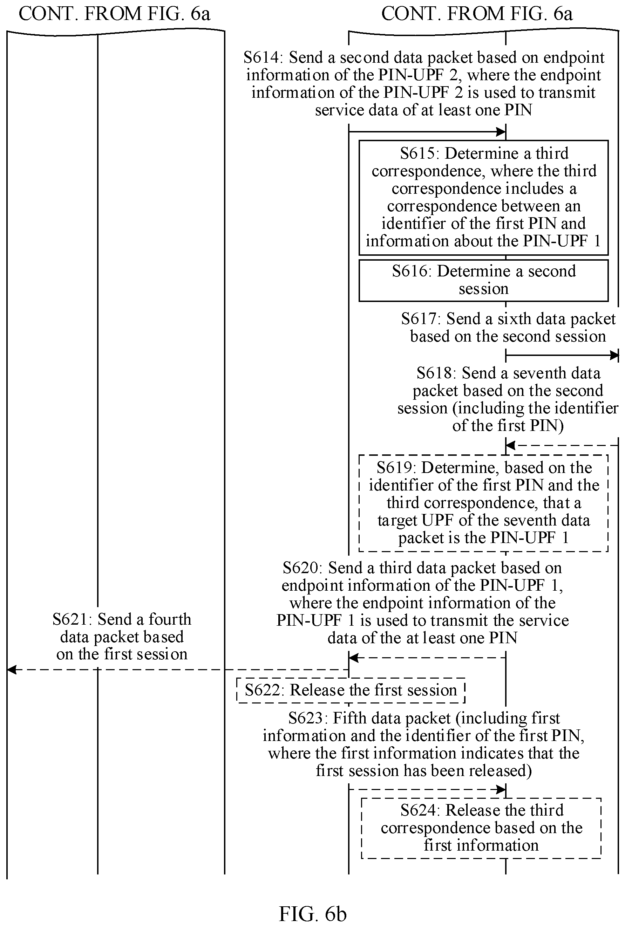

The following describes the first communication method in detail with reference to FIG. 6a and FIG. 6b. A first terminal device is located in a region 1, and is denoted as a UE 1. A second terminal device is located in a region 2, and is denoted as a UE 2. The UE 1 and the UE 2 are different UEs in a first PIN. A first UPF is located in the region 1, and is denoted as a PIN-UPF 1. A second UPF is located in the region 2, and is denoted as a PIN-UPF 2. A first SMF is located in the region 1, and is denoted as an SMF 1. The region 1 and the region 2 are different regions. As shown in FIG. 6a and FIG. 6b, the second communication method may include the following content.

S601, S605, S606, S609 to S612, and S614 to S624 in FIG. 6a and FIG. 6b are respectively the same as S401, S405, S406, S409 to S412, and S414 to S424 in FIG. 4a and FIG. 4b. A difference is as follows.

S602: The PIN-UPF 1 establishes a second correspondence.

The second correspondence includes information about the PIN-UPF 2 and information about at least one DN supported by the PIN-UPF 2, and the at least one DN includes a first DN. For an implementation process, refer to the descriptions in S502. Details are not described again.

S603: The UE 1 sends a PDU session establishment request message to an AMF. Correspondingly, the AMF receives the PDU session establishment request message from the UE 1.

In this embodiment, the PDU session establishment request message is used to request to establish a first session. The first session is a session of the first DN, and the first session is a session of the first PIN. Optionally, the PDU session establishment request message may include an identifier of the first DN (for example, a first DNN), an identifier of the first PIN, or the identifier of the first DN and the identifier of the first PIN. This is not limited.

S604: The AMF selects the SMF 1 based on the first DN.

In this embodiment, the AMF may select, based on the first DN, the SMF 1 to serve the first session. For example, the AMF may select, based on the first DNN, the SMF 1 to serve the first session. For example, the AMF may select the SMF 1 based on some information in the first DNN. For example, the first DNN is user1.beijing.PIN.com, and the AMF may select, based on service information (for example, PIN.com) in the first DDN, the SMF 1 that supports the service information to serve the first session. Optionally, the AMF may further obtain the first DNN. For example, the first DNN may be carried in the PDU session establishment request message; or the AMF may obtain the first DNN from a UDM. This is not limited.

S607: The SMF 1 sends a first message to the PIN-UPF 1. Correspondingly, the PIN-UPF 1 receives the first message from the SMF 1.

The first message may be used to request to establish the first session. The first message includes the identifier of the first DN (for example, the first DNN). Optionally, the first message may further include the identifier of the first PIN. Optionally, the first message may be a PFCP session establishment request message. This is not limited.

S608: The PIN-UPF 1 establishes a correspondence between the first DN and the first session.

The PIN-UPF 1 may establish (or store, maintain, record, or determine) the correspondence between the first DN and the first session. For example, the PIN-UPF 1 may establish a correspondence between the first DNN and the first session.

S613: The PIN-UPF 1 determines, based on the first DN and the second correspondence, that a target UPF of a first data packet is the PIN-UPF 2.

For example, the PIN-UPF 1 may determine, based on the first DNN and the second correspondence, that the target UPF of the first data packet is the PIN-UPF 2. For example, the second correspondence is between information about the second UPF and an identifier of at least one DN supported by the second UPF. The PIN-UPF 1 determines that the identifier of the at least one DN includes the first DN, and determines that the target UPF of the first data packet is the PIN-UPF 2. For another example, the second correspondence is between information about the second UPF and mask information of at least one DN supported by the second UPF, and the mask information includes information obtained by performing a mask operation on an identifier (for example, a DNN) of the at least one DN based on a mask parameter. If information obtained by performing a mask operation on the first DNN matches the mask information in the second correspondence, the PIN-UPF 1 determines that the target UPF of the first data packet is the PIN-UPF 2. For still another example, the second correspondence is between information about the second UPF and a second identifier range. The PIN-UPF 1 determines that the identifier of the first DN belongs to the second identifier range, and determines that the target UPF of the first data packet is the PIN-UPF 2. For an implementation process of S613, refer to the descriptions in S502. Details are not described again.

In the second communication method, the second correspondence includes the correspondence between the information about the second UPF and the information about the at least one DN supported by the second UPF. In this way, based on a DN to which a session belongs and the second correspondence, whether a target UPF of service data received based on the session is the second UPF can be determined. In this embodiment of this application, the first DN to which the first session belongs is included in the at least one DN. This means that even if the first terminal device and the second terminal device (a target terminal device of the first data packet) that are in the first PIN are located in different regions, the first UPF may send, based on the first DN and the second correspondence, the service data of the first data packet to the second UPF that serves the second terminal device, so that the service data of the first data packet is transmitted to the second terminal device via the second UPF, thereby implementing cross-region communication between different terminal devices in a same PIN.

In embodiments provided in this application, the methods provided in embodiments of this application are described from a perspective of interaction between a first user plane function network element, a second user plane function network element, and the like. Steps performed by a communication apparatus (for example, the first user plane function network element or the second user plane function network element) may be implemented by different function entities included in the communication apparatus. The communication apparatus (for example, the first user plane function network element or the second user plane function network element) may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

With reference to the accompanying drawings, the following describes communication apparatuses for implementing the foregoing methods in embodiments of this application. Therefore, all the foregoing content may be used in the following embodiments. Repeated content is not described again.

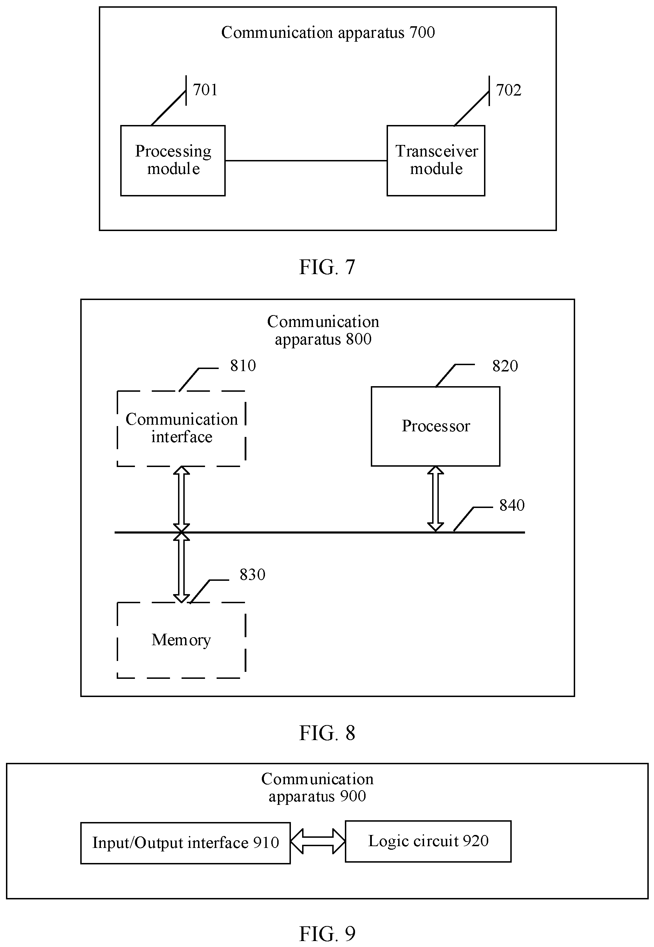

FIG. 7 is an example of a diagram of a structure of a communication apparatus 700. The communication apparatus 700 may implement functions or steps implemented by the first user plane function network element or the second user plane function network element in the foregoing method embodiments.

In an implementation, the communication apparatus 700 may include a processing module 701 and a transceiver module 702. The processing module 701 may be configured to perform data processing, for example, perform the foregoing method embodiments. The processing module 701 may also be referred to as a processing unit, or the like. The processing module 701 may be implemented by at least one processor or a processor-related circuit. The transceiver module 702 may be configured to implement a corresponding communication function, for example, receive or send related data, information, or a message. The transceiver module 702 may also be referred to as a communication interface, a communication module, a transceiver unit, or the like. The transceiver module 702 may be implemented by a transceiver or a transceiver-related circuit.

It should be noted that the communication apparatus 700 may include the processing module 701 but not include the transceiver module 702. Alternatively, the communication apparatus 700 may include the transceiver module 702 but not include the processing module 701. This may be specifically determined depending on whether the foregoing solution performed by the communication apparatus 700 includes a processing action and receiving and sending actions.

Optionally, the transceiver module 702 may include a sending module and a receiving module. The sending module is configured to perform a sending operation in the foregoing method embodiments. The receiving module is configured to perform a receiving operation in the foregoing method embodiments.

It should be noted that the communication apparatus 700 may include the sending module but not include the receiving module. Alternatively, the communication apparatus 700 may include the receiving module but not include the sending module. This may be specifically determined depending on whether the foregoing solution performed by the communication apparatus 700 includes a sending action and a receiving action.

Optionally, the communication apparatus 700 may further include a storage module, which is not shown in FIG. 7. The storage module may be implemented by at least one memory. The storage module may be configured to store instructions and/or data, and the processing module 701 may read the instructions and/or the data in the storage module, to cause the communication apparatus 700 to implement the foregoing method embodiments.

Optionally, the communication apparatus 700 may be a chip system. The chip system may include a chip, or may include a chip and another discrete device. This is not limited. The transceiver module 702 may be an input/output interface of a chip (for example, a baseband chip). The processing module 701 may be a processor of the chip system.

In a first implementation, the communication apparatus 700 may implement a function of the first user plane function network element, and may perform the following content: The transceiver module 702 is configured to: receive a first data packet from a first terminal device based on a first session, where the first session is a session of a first personal internet of things network; and send a second data packet to the second user plane function network element based on the first personal internet of things network and a first correspondence, where the first correspondence includes a correspondence between information about the second user plane function network element and information about at least one personal internet of things network served by the second user plane function network element, the at least one personal internet of things network includes the first personal internet of things network, and service data included in the second data packet is the same as service data included in the first data packet.

In a possible implementation, when sending the second data packet to the second user plane function network element based on the first personal internet of things network and the first correspondence, the processing module 701 is configured to determine, based on the first personal internet of things network and the first correspondence, that a target user plane function network element of the first data packet is the second user plane function network element; and the transceiver module 702 is configured to send the second data packet to the second user plane function network element based on endpoint information of the second user plane function network element, where the endpoint information of the second user plane function network element is used to transmit service data of the at least one personal internet of things network, and a packet header of the second data packet includes an identifier of the first personal internet of things network.

In a possible implementation, the transceiver module 702 is further configured to receive a third data packet from the second user plane function network element, where a packet header of the third data packet includes the identifier of the first personal internet of things network; the processing module 701 is configured to determine the first session based on the identifier of the first personal internet of things network; and the transceiver module 702 is further configured to send a fourth data packet to the first terminal device based on the first session, where service data included in the fourth data packet is the same as service data included in the third data packet.

In a possible implementation, the transceiver module 702 is further configured to send a fifth data packet to the second user plane function network element, where a packet header of the fifth data packet includes first information and the identifier of the first personal internet of things network, and the first information indicates that the first session of the first personal internet of things network has been released.

In a possible implementation, the transceiver module 702 is further configured to receive a first message from a session management function network element, where the first message is used to request to establish the first session of the first personal internet of things network; and the processing module 701 is further configured to establish the first session based on the first message.

In a second implementation, the communication apparatus 700 may implement a function of the first user plane function network element, and may perform the following content: The transceiver module 702 is configured to: receive a first data packet from a first terminal device based on a first session, where the first session is a session of a first data network, and the first session is a session of a first personal internet of things network; and send a second data packet to the second user plane function network element based on the first data network and a second correspondence, where the second correspondence includes a correspondence between information about the second user plane function network element and information about at least one data network supported by the second user plane function network element, the at least one data network includes the first data network, and service data included in the second data packet is the same as service data included in the first data packet.

In a possible implementation, when sending the second data packet to the second user plane function network element based on the first data network and the second correspondence, the processing module 701 is configured to determine, based on the first data network and the second correspondence, that a target user plane function network element of the first data packet is the second user plane function network element; and the transceiver module 702 is configured to send the second data packet to the second user plane function network element based on endpoint information of the second user plane function network element, where the endpoint information of the second user plane function network element is used to transmit service data of at least one personal internet of things network, the at least one personal internet of things network includes the first personal internet of things network, and a packet header of the second data packet includes an identifier of the first personal internet of things network.

In a possible implementation, the transceiver module 702 is further configured to receive a third data packet from the second user plane function network element, where a packet header of the third data packet includes the identifier of the first personal internet of things network; the processing module 701 is further configured to determine the first session based on the identifier of the first personal internet of things network; and the transceiver module 702 is further configured to send a fourth data packet to the first terminal device based on the first session, where service data included in the fourth data packet is the same as service data included in the third data packet.

In a possible implementation, the transceiver module 702 is further configured to send a fifth data packet to the second user plane function network element, where a packet header of the fifth data packet includes first information and the identifier of the first personal internet of things network, and the first information indicates that the first session of the first personal internet of things network has been released.

In a possible implementation, the transceiver module 702 is further configured to receive a first message from a session management function network element, where the first message is used to request to establish the first session of the first personal internet of things network, and the first message includes an identifier of the first data network; and the processing module 701 is further configured to establish the first session based on the first message.

In a third implementation, the communication apparatus 700 may implement a function of the second user plane function network element, and may perform the following content: The transceiver module 702 is configured to receive a second data packet from the first user plane function network element, where a packet header of the second data packet includes an identifier of a first personal internet of things network; the processing module 701 is configured to determine a third correspondence, where the third correspondence includes a correspondence between the identifier of the first personal internet of things network and information about the first user plane function network element; and the transceiver module 702 is further configured to send a sixth data packet to a second terminal device based on the identifier of the first personal internet of things network, where service data included in the sixth data packet is the same as service data included in the second data packet.

In a possible implementation, the transceiver module 702 is further configured to: receive a seventh data packet from the second terminal device, where the seventh data packet includes the identifier of the first personal internet of things network; and send a third data packet to the first user plane function network element based on the identifier of the first personal internet of things network and the third correspondence, where a packet header of the third data packet includes the identifier of the first personal internet of things network, and service data included in the third data packet is the same as service data included in the seventh data packet.

In a possible implementation, when sending the third data packet to the first user plane function network element based on the identifier of the first personal internet of things network and the third correspondence, the processing module 701 is configured to determine, based on the identifier of the first personal internet of things network and the third correspondence, that a target user plane function network element of the seventh data packet is the first user plane function network element; and the transceiver module 702 is configured to send the third data packet to the first user plane function network element based on endpoint information of the first user plane function network element, where the endpoint information of the first user plane function network element is used to transmit service data of at least one personal internet of things network, and the at least one personal internet of things network includes the first personal internet of things network.

In a possible implementation, the transceiver module 702 is further configured to receive a fifth data packet from the first user plane function network element, where a packet header of the fifth data packet includes first information and the identifier of the first personal internet of things network, and the first information indicates that a first session of the first personal internet of things network has been released; and the processing module 701 is further configured to delete the third correspondence based on the first information.

In a possible implementation, when sending the sixth data packet to the second terminal device based on the identifier of the first personal internet of things network, the processing module 701 is configured to determine a second session of the first personal internet of things network based on the identifier of the first personal internet of things network; and the transceiver module 702 is configured to send the sixth data packet to the second terminal device based on the second session.

In a fourth implementation, the communication apparatus 700 may implement a function of the first user plane function network element, and may perform the following content: The transceiver module 702 is configured to receive a first data packet from a first terminal device based on a first session, where the first session is a session of a first personal internet of things network; and send an eighth data packet to a second terminal device based on the first personal internet of things network and a first correspondence, where the first correspondence includes a correspondence between information about the first user plane function network element and information about at least one personal internet of things network served by the first user plane function network element, the at least one personal internet of things network served by the first user plane function network element includes the first personal internet of things network, and service data included in the eighth data packet is the same as service data included in the first data packet.

In a possible implementation, when sending the eighth data packet to the second terminal device based on the first personal internet of things network and the first correspondence, the processing module 701 is configured to: determine, based on the first personal internet of things network and the second correspondence, that a target user plane function network element of the first data packet is the first user plane function network element; and determine a third session of the first personal internet of things network; and the transceiver module 702 is configured to send the eighth data packet to the second terminal device based on the third session. For example, the first user plane function network element may determine the third session based on an identifier of the first personal internet of things network.

In a possible implementation, the transceiver module 702 is further configured to receive a first message from a session management function network element, where the first message is used to request to establish the first session of the first personal internet of things network; and the processing module 701 is further configured to establish the first session based on the first message.

In a fifth implementation, the communication apparatus 700 may implement a function of the first user plane function network element, and may perform the following content: The transceiver module 702 is configured to receive a first data packet from a first terminal device based on a first session, where the first session is a session of a first data network, and the first session is a session of a first personal internet of things network; and send an eighth data packet to a second terminal device based on the first data network and a second correspondence, where the second correspondence includes a correspondence between information about the first user plane function network element and information about at least one data network supported by the first user plane function network element, the at least one data network supported by the first user plane function network element includes the first data network, and service data included in the eighth data packet is the same as service data included in the first data packet.

In a possible implementation, when sending the eighth data packet to the second terminal device based on the first data network and the second correspondence, the processing module 701 is configured to: determine, based on the first data network and the second correspondence, that a target user plane function network element of the first data packet is the first user plane function network element; and determine a third session of the first personal internet of things network; and the transceiver module 702 is configured to send the eighth data packet to the second terminal device based on the third session. For example, the first user plane function network element may determine the third session based on an identifier of the first personal internet of things network.

In a possible implementation, the transceiver module 702 is further configured to receive a first message from a session management function network element, where the first message is used to request to establish the first session of the first personal internet of things network; and the processing module 701 is further configured to establish the first session based on the first message.

It should be understood that, for more detailed descriptions of corresponding processes performed by the modules, directly refer to related descriptions in the method embodiments. For brevity, details are not described herein again.

FIG. 8 is a diagram of a structure of a communication apparatus 800 according to an embodiment of this application. The communication apparatus 800 may include a processor 820, configured to implement or support the communication apparatus 800 in implementing a function of the first user plane function network element or the second user plane function network element in any method embodiment of this application. For details, refer to the detailed descriptions in the foregoing method embodiments. Details are not described herein again. For example, the processor 820 is configured to: read program instructions through a communication interface, and execute the program instructions, so that the communication apparatus 800 implements a corresponding method. The processor 820 may include one or more processors. This is not limited.

It should be noted that the foregoing functional module may be implemented by hardware, or may be implemented by a combination of the hardware and software. This is not limited. When the communication apparatus 800 includes only the processor 820, the communication apparatus 800 may be a chip, or may be a chip system.

For example, the communication apparatus 800 may be a chip system. The chip system may include a chip, or may include a chip and another discrete device. This is not limited.

Optionally, the communication apparatus 800 may further include a memory 830, configured to store program instructions and/or data. The memory 830 is coupled to the processor 820. Coupling may be understood as indirect coupling or a communication connection between apparatuses, units, or modules, may be in an electrical form, a mechanical form, or another form, and is used for information exchange between the apparatuses, the units, or the modules. The processor 820 may operate in collaboration with the memory 830. The processor 820 and the memory 830 may be integrated together, or may be disposed separately.

Further, the processor 820 is configured to execute the program instructions stored in the memory 830, so that the communication apparatus 800 implements the corresponding method.

One or more memories in the memory 830 may be included in the processor, or the memory 830 may exist independently, for example, an off-chip memory, and is connected to the processor 820 through a communication bus (represented by a bold line 840 in FIG. 8). The memory 830 and the processor 820 may alternatively be integrated together.

Optionally, the communication apparatus 800 further includes a communication interface 810 (represented by a dashed line in FIG. 8), configured to communicate with another device by using a transmission medium, so that an apparatus in the communication apparatus 800 may communicate with the another device. For example, when the communication apparatus is the first user plane function network element, the another device may be the second user plane function network element or the like. The processor 820 may receive and send data through the communication interface 810. For example, the processor 820 may be configured to control the communication interface 810 to receive and/or send a signal.

The communication interface 810 may be a transceiver. In hardware implementation, the transceiver may be configured to implement a function of the transceiver module 702, and the transceiver is integrated into the communication apparatus 800 to form the communication interface 810.

It should be noted that, the communication interface 810 may have a sending function and a receiving function, and may implement signal receiving and sending; may have a sending function, but does not have a receiving function, and is configured to implement signal sending; or may have a receiving function, but does not have a sending function, and is configured to implement signal receiving.

It should be noted that a specific connection medium between the communication interface 810, the processor 820, and the memory 830 is not limited in this embodiment of this application. In FIG. 8, the memory 830, the processor 820, and the communication interface 810 are connected through the communication bus 840. A manner of connection between other components is merely an example for description, and is not limited thereto. The communication bus 840 may be classified into an address bus, a data bus, a control bus, and the like. For ease of representation, only one bold line is used for representation in FIG. 8, but this does not mean that there is only one communication bus or only one type of communication bus.

In this embodiment of this application, the processor 820 may be a general-purpose processor, a digital signal processor, an application-specific integrated circuit, a field programmable gate array or another programmable logic device, a discrete gate or a transistor logic device, or a discrete hardware component. The general-purpose processor may be a microprocessor, any conventional processor, or the like. The methods disclosed with reference to embodiments of this application may be performed and completed by hardware in the processor, or may be performed and completed by a combination of the hardware in the processor and software.

In this embodiment of this application, the memory 830 may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that is used to carry or store program code in a form of instructions or data structure and that can be accessed by a computer, or may be a circuit or any other apparatus that can implement a storage function, and is configured to store the program instructions and/or the data.

In an example, the communication apparatus 800 may perform the following content: receiving a first data packet from a first terminal device based on a first session, where the first session is a session of a first personal internet of things network; and sending a second data packet to the second user plane function network element based on the first personal internet of things network and a first correspondence, where the first correspondence includes a correspondence between information about the second user plane function network element and information about at least one personal internet of things network served by the second user plane function network element, the at least one personal internet of things network includes the first personal internet of things network, and service data included in the second data packet is the same as service data included in the first data packet.

In another example, the communication apparatus 800 may perform the following content: receiving a first data packet from a first terminal device based on a first session, where the first session is a session of a first data network, and the first session is a session of a first personal internet of things network; and sending a second data packet to the second user plane function network element based on the first data network and a second correspondence, where the second correspondence includes a correspondence between information about the second user plane function network element and information about at least one data network supported by the second user plane function network element, the at least one data network includes the first data network, and service data included in the second data packet is the same as service data included in the first data packet.

In another example, the communication apparatus 800 may perform the following content: receiving a second data packet from the first user plane function network element, where a packet header of the second data packet includes an identifier of a first personal internet of things network; determining a third correspondence, where the third correspondence includes a correspondence between the identifier of the first personal internet of things network and information about the first user plane function network element; and sending a sixth data packet to a second terminal device based on the identifier of the first personal internet of things network, where service data included in the sixth data packet is the same as service data included in the second data packet.

In another example, the communication apparatus 800 may perform the following content: receiving a first data packet from a first terminal device based on a first session, where the first session is a session of a first personal internet of things network; and sending an eighth data packet to a second terminal device based on the first personal internet of things network and a first correspondence, where the first correspondence includes a correspondence between information about the first user plane function network element and information about at least one personal internet of things network served by the first user plane function network element, the at least one personal internet of things network served by the first user plane function network element includes the first personal internet of things network, and service data included in the eighth data packet is the same as service data included in the first data packet.

In still another example, the communication apparatus 800 may perform the following content: receiving a first data packet from a first terminal device based on a first session, where the first session is a session of a first data network, and the first session is a session of a first personal internet of things network; and sending an eighth data packet to a second terminal device based on the first data network and a second correspondence, where the second correspondence includes a correspondence between information about the first user plane function network element and information about at least one data network supported by the first user plane function network element, the at least one data network supported by the first user plane function network element includes the first data network, and service data included in the eighth data packet is the same as service data included in the first data packet.

For specific implementation processes, refer to the foregoing method embodiments. Details are not described herein again.

Based on a same concept, refer to FIG. 9. An embodiment of this application further provides another communication apparatus 900, including an input/output interface 910 and a logic circuit 920. The input/output interface 910 is configured to: receive code instructions, and transmit the code instructions to the logic circuit 920. The logic circuit 920 is configured to run the code instructions, to perform the method performed by the first user plane function network element or the second user plane function network element in any one of the foregoing embodiments.

The communication apparatus 900 provided in this embodiment may implement a function of the first user plane function network element or the second user plane function network element in the foregoing embodiments. Therefore, for technical effects that can be achieved by this embodiment, refer to the foregoing method embodiments. Details are not described herein again.

An embodiment of this application further provides a communication system. The communication system may include one or more of the following: a first user plane function network element or a second user plane function network element. For the first user plane function network element or the second user plane function network element, refer to the descriptions in the foregoing method embodiments. Details are not described again.

An embodiment of this application further provides a computer-readable storage medium, including program instructions. When the program instructions are run on a computer, the computer is caused to perform the method or the steps of the first user plane function network element or the second user plane function network element in the foregoing embodiments.

An embodiment of this application further provides a computer program product, including program instructions. When the program instructions are run on a computer, the computer is caused to perform the method or the steps of the first user plane function network element or the second user plane function network element in the foregoing embodiments.

An embodiment of this application provides a chip system. The chip system includes a processor, configured to implement a function (for example, perform a corresponding method or step) of the first user plane function network element or the second user plane function network element in the foregoing methods. The chip system may include a chip, or may include a chip and another discrete device.

Optionally, the chip system further includes a memory. The memory is configured to store program instructions, so that the processor reads and executes the program instructions, to implement a corresponding method.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In embodiments of this application, "a plurality of" may mean two or more. In view of this, in embodiments of this application, "a plurality of" may alternatively be understood as "at least two". "At least one" may be understood as one or more, for example, one, two, or more. For example, "including at least one" means including one, two, or more. For example, including at least one of A, B, and C means that A, B, C, A and B, A and C, B and C, or A, B, and C may be included. "And/or" describes an association relationship between associated objects and three relationships may specifically exist. For example, A and/or B may represent the following three cases: Only A exists, both A and B exist, and only B exists. In addition, unless otherwise specified, the character "/" generally represents an "or" relationship between the associated objects.

In addition, the terms "system" and "network" in embodiments of this application may be used interchangeably, and "according to" and "based on" may be used interchangeably.

Ordinal numerals such as "first" and "second" mentioned in embodiments of this application are usually used for distinguishing between different objects, but are not intended to limit a sequence, a time sequence, priorities, importance, or the like of a plurality of objects. For example, a first user plane function network element and a second user plane function network element in embodiments of this application are configured to distinguish between two user plane function network elements, and do not limit priorities, importance, or the like of the two user plane function network elements.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, to be specific, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, a part that essentially contributes to the technical solutions of this application or a part of the technical solutions may be implemented in a form of software product. The computer software product is stored in a storage medium, and includes several instructions for instructing a computer device (which may be a personal computer, a server, a network device, or the like) to perform all or a part of steps of the methods in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, applied to a first user plane function network element, wherein the method comprises:
receiving a first data packet from a first terminal device based on a first session, wherein the first session is a session of a first personal internet of things network; and
sending a second data packet to a second user plane function network element based on the first personal internet of things network and a first correspondence, wherein the first correspondence comprises a correspondence between information about the second user plane function network element and information about at least one personal internet of things network served by the second user plane function network element, the at least one personal internet of things network comprises the first personal internet of things network, and service data comprised in the second data packet is the same as service data comprised in the first data packet.

2. The method according to claim 1, wherein the sending the second data packet to the second user plane function network element based on the first personal internet of things network and the first correspondence comprises:
determining, based on the first personal internet of things network and the first correspondence, that a target user plane function network element of the first data packet is the second user plane function network element; and
sending the second data packet to the second user plane function network element based on endpoint information of the second user plane function network element, wherein the endpoint information of the second user plane function network element is used to transmit service data of the at least one personal internet of things network, and a packet header of the second data packet comprises an identifier of the first personal internet of things network.

3. The method according to claim 1 or 2, wherein the method further comprises:
receiving a third data packet from the second user plane function network element, wherein a packet header of the third data packet comprises the identifier of the first personal internet of things network;
determining the first session based on the identifier of the first personal internet of things network; and
sending a fourth data packet to the first terminal device based on the first session, wherein service data comprised in the fourth data packet is the same as service data comprised in the third data packet.

4. The method according to any one of claims 1 to 3, wherein the method further comprises:
sending a fifth data packet to the second user plane function network element, wherein a packet header of the fifth data packet comprises first information and the identifier of the first personal internet of things network, and the first information indicates that the first session of the first personal internet of things network has been released.

5. The method according to any one of claims 1 to 4, wherein the method further comprises:
receiving a first message from a session management function network element, wherein the first message is used to request to establish the first session of the first personal internet of things network; and
establishing the first session based on the first message.

6. The method according to any one of claims 1 to 5, wherein the information about the at least one personal internet of things network comprises one or more of the following: an identifier of the at least one personal internet of things network, mask information of the at least one personal internet of things network, or a first identifier range, wherein the identifier of the at least one personal internet of things network belongs to the first identifier range.

7. A communication method, applied to a first user plane function network element, wherein the method comprises:
receiving a first data packet from a first terminal device based on a first session, wherein the first session is a session of a first data network, and the first session is a session of a first personal internet of things network; and
sending a second data packet to a second user plane function network element based on the first data network and a second correspondence, wherein the second correspondence comprises a correspondence between information about the second user plane function network element and information about at least one data network supported by the second user plane function network element, the at least one data network comprises the first data network, and service data comprised in the second data packet is the same as service data comprised in the first data packet.

8. The method according to claim 7, wherein the sending the second data packet to the second user plane function network element based on the first data network and the second correspondence comprises:
determining, based on the first data network and the second correspondence, that a target user plane function network element of the first data packet is the second user plane function network element; and
sending the second data packet to the second user plane function network element based on endpoint information of the second user plane function network element, wherein the endpoint information of the second user plane function network element is used to transmit service data of at least one personal internet of things network, the at least one personal internet of things network comprises the first personal internet of things network, and a packet header of the second data packet comprises an identifier of the first personal internet of things network.

9. The method according to claim 7 or 8, wherein the method further comprises:
receiving a third data packet from the second user plane function network element, wherein a packet header of the third data packet comprises the identifier of the first personal internet of things network;
determining the first session based on the identifier of the first personal internet of things network; and
sending a fourth data packet to the first terminal device based on the first session, wherein service data comprised in the fourth data packet is the same as service data comprised in the third data packet.

10. The method according to any one of claims 7 to 9, wherein the method further comprises:
sending a fifth data packet to the second user plane function network element, wherein a packet header of the fifth data packet comprises first information and the identifier of the first personal internet of things network, and the first information indicates that the first session of the first personal internet of things network has been released.

11. The method according to any one of claims 7 to 10, wherein the method further comprises:
receiving a first message from a session management function network element, wherein the first message is used to request to establish the first session of the first personal internet of things network, and the first message comprises an identifier of the first data network; and
establishing the first session based on the first message.

12. The method according to any one of claims 7 to 11, wherein the information about the at least one data network comprises one or more of the following: an identifier of the at least one data network, mask information of the at least one data network, or a second identifier range, wherein the identifier of the at least one data network belongs to the second identifier range.

13. A communication method, applied to a second user plane function network element, wherein the method comprises:
receiving a second data packet from a first user plane function network element, wherein a packet header of the second data packet comprises an identifier of a first personal internet of things network;
determining a third correspondence, wherein the third correspondence comprises a correspondence between the identifier of the first personal internet of things network and information about the first user plane function network element; and
sending a sixth data packet to a second terminal device based on the identifier of the first personal internet of things network, wherein service data comprised in the sixth data packet is the same as service data comprised in the second data packet.

14. The method according to claim 13, wherein the method further comprises:
receiving a seventh data packet from the second terminal device, wherein the seventh data packet comprises the identifier of the first personal internet of things network; and
sending a third data packet to the first user plane function network element based on the identifier of the first personal internet of things network and the third correspondence, wherein a packet header of the third data packet comprises the identifier of the first personal internet of things network, and service data comprised in the third data packet is the same as service data comprised in the seventh data packet.

15. The method according to claim 14, wherein the sending the third data packet to the first user plane function network element based on the identifier of the first personal internet of things network and the third correspondence comprises:
determining, based on the identifier of the first personal internet of things network and the third correspondence, that a target user plane function network element of the seventh data packet is the first user plane function network element; and
sending the third data packet to the first user plane function network element based on endpoint information of the first user plane function network element, wherein the endpoint information of the first user plane function network element is used to transmit service data of at least one personal internet of things network, and the at least one personal internet of things network comprises the first personal internet of things network.

16. The method according to any one of claims 13 to 15, wherein the method further comprises:
receiving a fifth data packet from the first user plane function network element, wherein a packet header of the fifth data packet comprises first information and the identifier of the first personal internet of things network, and the first information indicates that a first session of the first personal internet of things network has been released; and
deleting the third correspondence based on the first information.

17. The method according to any one of claims 13 to 16, wherein the sending the sixth data packet to the second terminal device based on the identifier of the first personal internet of things network comprises:
determining a second session of the first personal internet of things network based on the identifier of the first personal internet of things network; and
sending the sixth data packet to the second terminal device based on the second session.

18. A communication apparatus, comprising a unit or a module configured to implement the method according to any one of claims 1 to 6, comprising a unit or a module configured to implement the method according to any one of claims 7 to 12, or comprising a unit or a module configured to implement the method according to any one of claims 13 to 17.

19. A communication apparatus, wherein the communication apparatus comprises at least one processor and a memory;
the memory is configured to store a computer program or instructions; and
the at least one processor is configured to execute the computer program or the instructions in the memory, to perform the method according to any one of claims 1 to 6, the method according to any one of claims 7 to 12, or the method according to any one of claims 13 to 17.

20. A communication system, wherein the communication system comprises one or more of the following: a first user plane function network element or a second user plane network element, wherein
the first user plane function network element is configured to perform the method according to any one of claims 1 to 6, or the first user plane function network element is configured to perform the method according to any one of claims 7 to 12, and the second user plane function network element is configured to perform the method according to any one of claims 13 to 17.

21. A computer-readable storage medium, wherein the computer-readable storage medium stores computer instructions, and when the computer instructions are executed, the computer is caused to perform the method according to any one of claims 1 to 6, the method according to any one of claims 7 to 12, or the method according to any one of claims 13 to 17.

22. A computer program product, wherein the computer program product comprises computer program code, and when the computer program code is run by a computer, the computer is caused to perform the method according to any one of claims 1 to 6, the method according to any one of claims 7 to 12, or the method according to any one of claims 13 to 17.
